# EUROPEAN PATENT SPECIFICATION

(11) **EP 1 560 378 B1**
(45) Date of publication and mention of the grant of the patent: **07.11.2012**
(21) Application number: 05001900.9
(22) Date of filing: 31.01.2005
(51) Int. Cl.: H04L 29/12, H04W 8/30

(54) **Wireless mobility gateway**
Mobilitätdienstunterstützungsübergangseinrichtung in drahtlosen Netzwerken
Une passerelle des services mobiles dans les réseaux sans fil

(30) Priority: 31.01.2004 GB 0402183
(43) Date of publication of application: 03.08.2005
(73) Proprietor: Athonet S.R.L., 34149 Trieste (IT)
(72) Inventor: Ioannidis, E., Sheffield S1 4EW (GB)
(74) Representative: Montevecchi, Emma

(56) References cited:
- US-A1- 2003 021 256
- US-A1- 2003 153 296
- US-A1- 2003 227 880

## Description

### 1. Field of Invention

This invention pertains to the field of telecommunications and particularly wireless mobile internet communications.

### 2. Related Art and Other Considerations: The Mobile Core Network

The Mobile Core Network is part of second and third generation (3G) Mobile Networks. It is widely understood as the network that connects the radio specific portions, otherwise called Radio Access Networks (RANs), to external data networks in particular Internet Protocol (IP) networks such as the Internet and Corporate Networks. Simply speaking, the Core Network processes signalling messages (sometimes called "control messages") received from the RAN and responds appropriately. According to the content of these signalling exchanges, the Core Network begins appropriately forwarding IP packets between the RAN and external IP networks and vice versa. This forwarding is often performed inefficiently, therefore what is needed is a method and apparatus that allows efficient IP packet forwarding from and to all types of mobile terminals and users.

The two main functional entities that perform this forwarding in the conventional Mobile Core Network are Serving GPRS Support Node (SGSN) and the Gateway GPRS Support Node (GGSN). The functionality of these network elements is defined by the mobile standardisation group called the Third Generation Partnership Project (3GPP). The SGSN communicates directly with the RAN, and in particular with the 3G Radio Network Controller (RNC), 3G Base Station Controller (BSC) and 2G BSC, while the GGSN communicates with external IP networks.

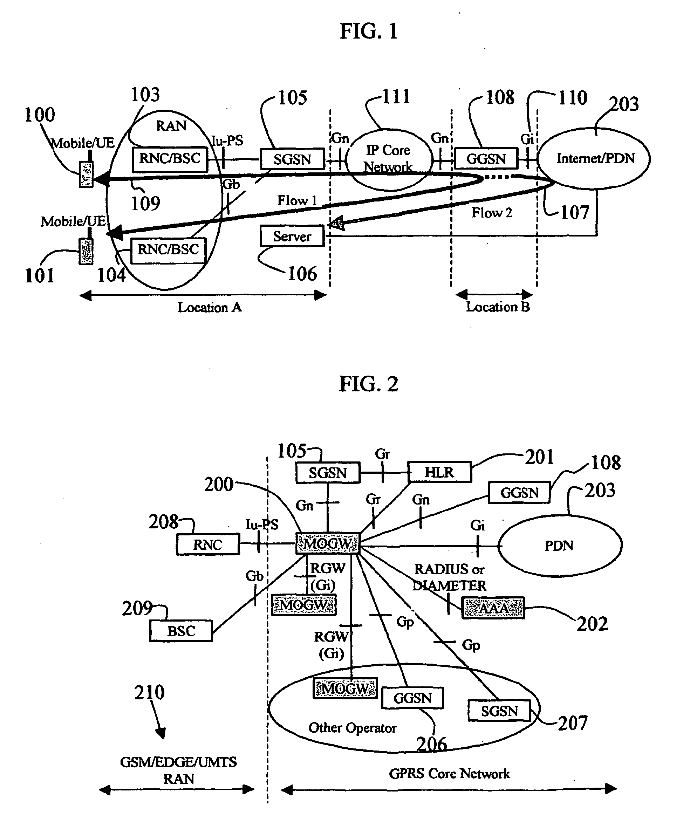

An illustration of the IP packet forwarding principles of the conventional mobile core network architecture is shown in Figure 1.

As the mobile users are connected and move between RNC/BSC 103 and RNC/BSC 104 they will remain "anchored" at the same GGSN 108. This means that all traffic sent from or to a user will have to pass the GGSN, and that normal Internet-like IP routing may only be performed beyond the GGSN that is on the Gi interface 110. This can be very inefficient when the mobile user wants to communicate with a peer (user or a server) which is close to it, while the GGSN is far away from both mobile user and the peer. The same is valid for the case where two mobile users have an ongoing data communication when they are geographically close. In this description we refer to "Mobile", "User Terminal", "User Equipment" or UE interchangeably since they both identify the mobile terminal.

In order for Mobile 100 to communicate with Mobile 101, although they are located in the same geographical area (Location A), all traffic must be sent through the GGSN 108 in Location B as illustrated in 109 traffic "Flow 1". This scenario is typically found today in mobile networks, where Locations A and B may be in different cities or in different parts of large cities. The second flow 107 ("Flow 2") illustrates the communication flow between Mobile 100 and Server 106 (e.g. directory service) both situated in Location A. Once again all traffic must go through the GGSN 108 in Location B and back.

Therefore in essence this architecture disallows optimal data routing. This results in inefficient use of bandwidth resources since, independently of the final destination, a traffic packet may traverse multiple times the national, regional or metropolitan "IP Network" 111 and thus puts extra traffic load on that network. For the same reason this increases the traffic latency, since the traffic path between Mobile 100 and Mobile 101 or Server 106 is longer and non-optimal. This added latency may have an effect on user perception of the quality of the service. It may also be complex to find the correct geographical placement for SGSNs and GGSNs given the effect on the traffic flows. One may decide to always place an SGSN next to a GGSN to optimise traffic flows but that is still costly, inefficient and is not guaranteed to solve the problem. It also defeats the purpose of the architecture. That is why this solution is not feasible and therefore not deployed in most current networks.

Finally in the above architecture the only node that communicates with external peers on an IP network (e.g. Internet) is the GGSN. However the GGSN according to 3GPP specifications has little or none of the information required to enable advanced services such as location-based services. This makes it difficult to deploy simple and low-cost location-based services over an IP network.

US-A-2003/0021256 describes a method of providing simplifying a protocol structure for a packet data service. An ATM protocol is used for communication between an SGSN and a GGSN and a downlink TEID and an uplink TEID are assigned to an RNC and the GGSN and thereby GTP tunnels are integrated into one GTP tunnel.

### 3. Summary

A Wireless Mobility Gateway (MOGW) method and apparatus determines whether a wireless connection has been requested by a mobile terminal. As a consequence it performs security functions to authenticate the mobile user and grant access. If requested by the mobile user it then also creates a wireless connection to allow it to perform IP packet transmission and reception and therefore make use of mobile data services. The MOGW is able to directly route packets to Internet and Corporate Networks, thus rendering the whole mobile network more efficient and simpler to construct and manage. The MOGW generates a special tunnel identifier to identify the wireless connection that must be contained in all packets received from the RAN. The MOGW generates such a tunnel identifier by concatenating a number of values that characterise the connection. Therefore simply by reading this tunnel identifier the MOGW can more efficiently forward packets appropriately. The Mobility protocol and function between MOGWs allows Mobile terminals to easily move between geographical areas served by different MOGWs.

### 4. Introduction to the Drawings

Figure 1 illustrates the inefficient packet routing in a conventional mobile core network;
Figure 2 illustrates the evolved Core Network Architecture using the MOGW in accordance with exemplary embodiments of the present invention;
Figure 3 illustrates the Mobility Gateway (MOGW) architecture scenarios for connectivity towards the Radio Access Network in accordance with exemplary embodiments of the present invention;
Figure 4 illustrates the MOGW Logical Architecture Scenarios for connectivity towards the RAN (split MOGW-U/MOGW-c) in accordance with exemplary embodiments of the present invention;
Figure 5 is a schematic of the MOGW Functional Architecture in accordance with exemplary embodiments of the present invention;
Figure 6 is a message diagram of the MOGW's Attach procedure with HLR in accordance with exemplary embodiments of the present invention;
Figure 7 is a message diagram of the MOGW's Attach procedure with AAA and HLR in accordance with exemplary embodiments of the present invention;
Figure 8 is a message diagram of the MOGW's PDP Context Activation protocol in accordance with exemplary embodiments of the present invention;
Figure 9 illustrates a GTP TEID Format (Type 1) in accordance with exemplary embodiments of the present invention;
Figure 10 illustrates a GTP TEID Format (Type 2) in accordance with exemplary embodiments of the present invention;
Figure 11 illustrates a GTP TEID Format (Type 3) when the Format Type flag is equal to zero in accordance with exemplary embodiments of the present invention;
Figure 12 illustrates a GTP TEID Format (Type 3) when the Format Type flag is equal to zero in accordance with exemplary embodiments of the present invention;
Figure 13 illustrates the 64-bit PDP Address format when created from an IPv4 address in accordance with exemplary embodiments of the present invention;
Figure 14 is a schematic of the Iu-to-Gi and Gi-to-Iu forwarding architecture in accordance with exemplary embodiments of the present invention;
Figure 15 is a schematic of the Iu-to-Gn and Gn-to-Iu forwarding architecture in accordance with exemplary embodiments of the present invention;
Figure 16 illustrates a schematic of the alternative Corporate Mobile User Traffic Forwarding and Internal Application Server architecture in accordance with exemplary embodiments of the present invention;
Figure 17 illustrates a schematic of the signalling flows for the Simple Inter-MOGW Mobility Procedure in accordance with exemplary embodiments of the present invention;
Figure 18 illustrates a schematic of the traffic flows for the Simple Inter-MOGW Mobility Procedure in accordance with exemplary embodiments of the present invention;
Figure 19 illustrates the signalling message exchange for the Simple Inter-MOGW Mobility procedure in accordance with exemplary embodiments of the present invention;
Figure 20 illustrates the signalling message exchange to perform the Tunnel Termination procedure for "Tunnel Option" for the Simple Inter-MOGW case in accordance with exemplary embodiments of the present invention;
Figure 21 illustrates the signalling exchange for the Anticipated Inter-MOGW procedure in accordance with exemplary embodiments of the present invention;
Figure 22 illustrates a schematic of the interworking between MOGW and SGSN/GGSN nodes in accordance with exemplary embodiments of the present invention;
Figure 23 illustrates a schematic of the location based communication using the MOGW in accordance with exemplary embodiments of the present invention;
Figure 24 illustrates the message exchange between P-MOGW and N-MOGW for the Anticipated Inter-MOGW mobility procedure in accordance with exemplary embodiments of the present invention;
Figure 25 illustrates the message exchange between P-MOGW and N-MOGW for the Simple Inter-MOGW mobility procedure in accordance with exemplary embodiments of the present invention;
Figure 26 is a flowchart describing the Iu forwarding function's algorithm performed on receiving a packet from the Iu-ps interface in accordance with exemplary embodiments of the present invention;
Figure 27 is a flowchart describing the Gi forwarding function's algorithm performed on receiving a tagged packet from the Iu or Gn forwarding functions in accordance with exemplary embodiments of the present invention;
Figure 28 is a flowchart describing the Iu forwarding function's algorithm performed on receiving a tagged packet from the Gi or Gn forwarding functions in accordance with exemplary embodiments of the present invention;
Figure 29A, 29B and 29C are flowcharts describing the Gi forwarding function's algorithm performed on receiving an IP packet from the Gi interface in accordance with exemplary embodiments of the present invention;
Figure 30 is a flowchart describing the Gn forwarding function's algorithm performed on receiving a tagged packet from the Iu or Gi forwarding functions in accordance with exemplary embodiments of the present invention;
Figure 31 is a flowchart describing the Gn forwarding function's algorithm performed on receiving a packet from the Gn interface in accordance with exemplary embodiments of the present invention;

### 5. Detailed Description

### 5.1 Evolved Core Network Architecture

The evolved network architecture is illustrated in Figure 2. By using a single device to replace SGSN and GGSN, called Wireless Mobility Gateway (MOGW) 200 it is possible to:
- reduce costs (i.e. one product instead of two)
- facilitate development of new applications dependent on information which is normally only found deep inside the mobile network (e.g. location-based information)
- increase bandwidth efficiency in the mobile packet network
- decrease end-to-end delay
- simplify network management and deployment

This cannot be achieved only by integrating the functionality of the SGSN and that of the GGSN. As described in this document, a number of complex functions need to be modified and new functions need to be added in order to achieve the benefits listed above.

The MOGW 200 will be the main data node in the Core Network and it will enable data communication by users on a GSM/EDGE/UMTS RAN 210 to any IP-based packet data network 203 (e.g. Internet). The GSN/EDGE/UMTS RAN is formed by RNC 208 and BSC 209 devices. The MOGW is also able to interwork with existing Core Network nodes within the same operator's network namely the SGSN 105 and GGSN 108. The MOGW is also able to interwork with existing Core Network nodes outside the mobile network in which the MOGW is located such as SGSN 206 and GGSN 207. It will be able to perform authentication of the mobile user through the HLR (Home Location Register) 201 or the AAA (Authentication, and Accounting) 202 or a combination of both.

### 5.2 MOGW Node Architecture

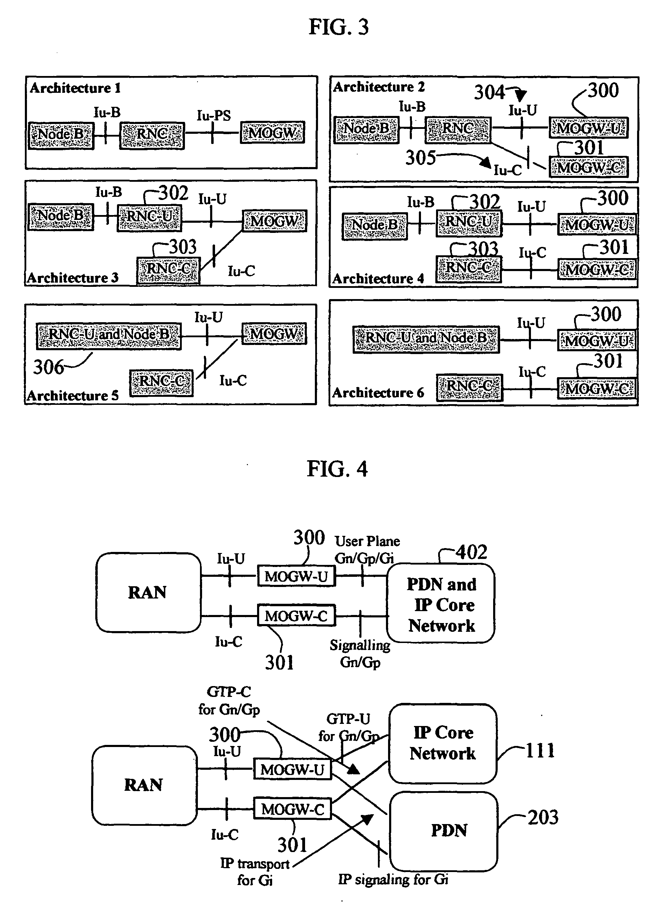

Six MOGW Node Architecture scenarios are shown in Figure 3. The MOGW may be logically divided into two parts: signalling/control part and user traffic part. We will call these respectively MOGW-C 300 and MOGW-U 301. The MOGW-C and MOGW-U may be physically located in the same device or in different physical devices. As shown in the figure the same signalling and user traffic functional division may be applied to the Radio Network Controller (RNC) with which the MOGW is connected. The RNC may be separated into a control RNC-C 303 and a user traffic RNC-U 302 and therefore the Iu-ps interface is also separated into the Iu-U user plane 304 and Iu-C control plane 305 parts. The MOGW is compatible with all configurations involving different locations of the control and user traffic parts. Since the SGSN and GGSN are considered legacy devices, used only for backwards compatibility and connectivity to existing networks, the most important functional subdivision to consider involves the RNC and MOGW. In addition to the logical architectures shown in Figure 3, it is possible for the RNC-U 302 and MOGW-U 301 parts to be physically combined or separated, and similarly for the RNC-C 303 and MOGW-C 302 parts. Furthermore it is possible for the Node B (otherwise called Radio Base Station) and RNC-U to be combined (306) and connected to the MOGW or MOGW-U as shown in Architecture 5 and 6.

Figure 4 illustrates the scenarios involving connectivity between MOGW and the Core Network (Gn/Gp) or PDN (Gi). The MOGW-U 400 and MOGW-C 401 may communicate with a combined Core Network and PDN 402 or with a separated Core Network 111 and PDN 203. Although only the scenario involving separate MOGW-U 400 and MOGW-C 401 logical devices is illustrated, the same external interfaces in Figure 4 can be applied to the case where the MOGW-U and MOGW-C are a combined entity.

### 5.3 MOGW Functions

The MOGW node architecture is further subdivided into functions, as shown in the functional architecture diagram in Figure 4.

From the user traffic forwarding viewpoint, the MOGW is represented by the MOGW-U 300 as illustrated in Figure 4. The MOGW-U is made up of six forwarding direction procedures: Iu-to-Gi (500), Gi-to-Iu (501), Iu-to-Gn (502), Gn-to-Iu (503), Gi-to-Gn (509) and Gn-to-Gi (510). This functionality may be centralised on one or more processors or processor card common to the whole MOGW, or alternatively it may be distributed on physical interface cards (e.g. Ethernet, ATM etc.). For example the Iu-to-Gi functionality may be distributed onto one or more ATM Iu-ps interface cards with network processors. Similarly the Gi-to-Iu functionality may be distributed onto one or more Ethernet Gi interface cards with network processors. The forwarding functionality makes use of forwarding tables that are used to determine the type of processing and forwarding for packets.

Instead in the control plane the MOGW may be represented by the MOGW-C 301 control function. This function handles the signalling procedures and updates the forwarding tables used by the forwarding functions described previously.

The MOGW is capable of communicating with other MOGWs both in terms of control or signalling traffic and user traffic. This communication is performed on the Gi interface and is therefore embedded in the Gi-related forwarding direction procedures illustrated previously.

The MOGW is also capable of containing an Internal Application Server 505. This can be used to run different types of applications used by mobile customers such as directory information and games. Applications used by the mobile network for internal purposes may also be run on the server and this includes location-based services.

User traffic packets and signalling will be received over the external MOGW interfaces namely the Iu-ps 506, Gi 507 and Gn 508. There may be multiple instances of these interfaces on the MOGW as shown in the figure.

### 5.4 Mobility Gateway Control Plane (MOGW-C) Functionality

### 5.4.1 Basic Packet-switched Connection setup

The MOGW implements the basic In procedures that allow a mobile terminal to "Attach" and then activate a connection ("PDP Context Activation") with some differences from the 3GPP standards.

The MOGW supports the UMTS GPRS Attach procedure (IMSI Attach or a combined GPRS/IMSI attach) as defined in 3GPP standards. The MOGW also supports authentication procedures as specified in 3GPP standards which will involve communication with other nodes in the network such as the HLR.

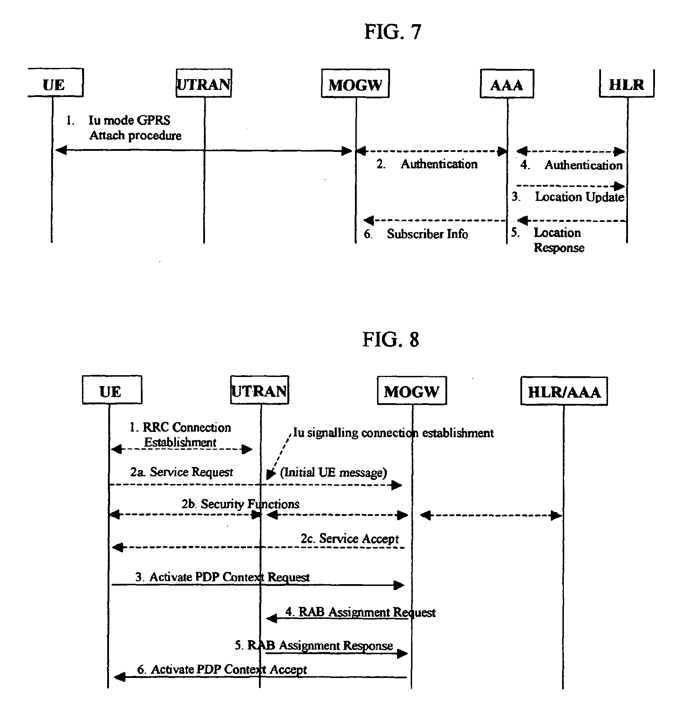

However, an important variation from 3GPP standards is that the MOGW will not need to support the Gn/Gp messages for "Create PDP Context Request" and "Create PDP Context Response" towards and from the GGSN. This is illustrated in Figure 8. Following a successful PDP Context Activation procedure, the MOGW will receive the appropriate Iu-U traffic packets and will be able to extract the user traffic payload and forward it to its Gi IP interfaces. The forwarding may depend on the Access Point Name (APN) which identifies which service or external network the mobile terminal wants to connect to. This difference is a major advantage of the MOGW approach since it reduces signalling and allows efficient routing of user traffic while remaining compatible with existing GPRS networks.

### 5.4.1.1 Attach Procedure

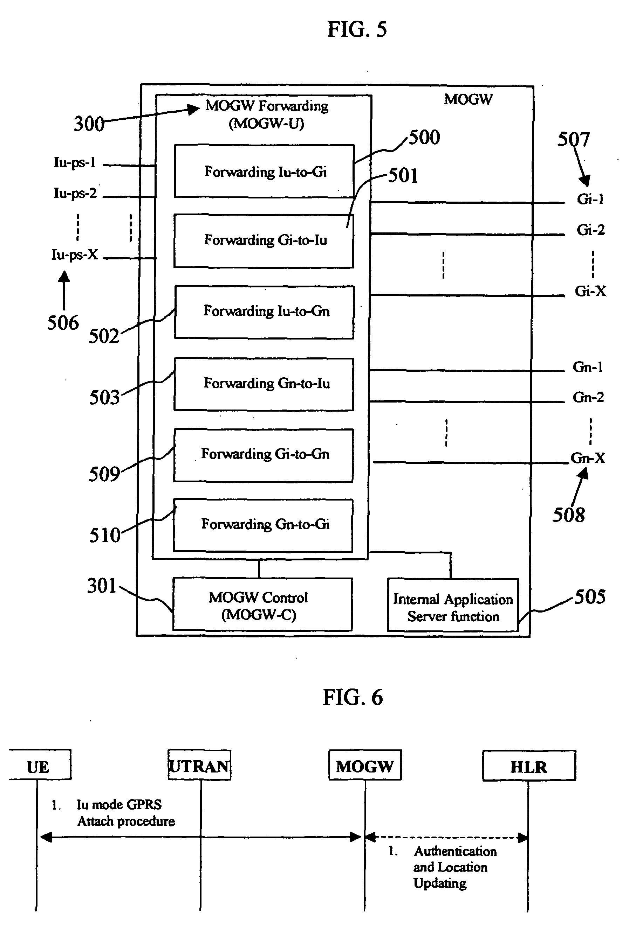

This MOGW performs the basic Attach procedure as illustrated in Figure 6. An alternative Attach procedure is illustrated in Figure 7. In the latter case the MOGW does not communicate with the HLR but instead with a AAA (Authentication, Authorisation and Accounting) node. Well known AAA interface protocols are RADIUS and DIAMETER. The AAA interface may in this case be embedded in the HLR server or in a separate AAA server that either replaces the HLR or communicates with an HLR server. After the authentication procedure the AAA server must start the Location Update procedure towards the HLR. It will receive the mobile user's subscription information in reply and must communicate this through the AAA protocol to the MOGW.

### 5.4.1.2 PDP Context Activation Procedure

This procedure is illustrated in Figure 8. It is different from that specified in 3GPP standards since the MOGW will not perform signalling towards the GGSN which does not exist in the new architecture.

Following is a description of the numbered message exchanges in Figure 8:

### 1) RRC Connection

This message is required only if the terminal (UE) does not have already an active RRC connection. The RRC Connection is needed for the UE to communicate with the RNC and the rest of the network.

### 2) Service Request/Accept, Security and Iu signalling establishment

The UE sends a Service request message to the MOGW if it wants to establish a secure packet-switched connection to it or if it wants to send signalling messages (e.g. Activate PDP Context Request). In the latter case it indicates that it requires a Service Type equal to Signalling while in the former case it is equal to Data. A signalling connection (Iu-PS) is established between RNC and MOGW through Iu-C signalling described previously, if one does not already exist. The MOGW can also initiate security procedures following the Service Request message. If the Service Type was equal to Data, the MOGW will automatically request resource reservation (i.e. RABs) for any of the UE's PDP Contexts which are still in active state in the MOGW. The Service Accept message is then used to inform the UE that this procedure has been completed.

### 3) Activate PDP Context Request

Upon receiving an Activate PDP Context Request message or an Activate Secondary PDP Context Request message, the MOGW parses the message, performs eventual checks and establishes the PDP Context. For the first PDP Context established by a user within each APN, this procedure must include the configuration of an IPv4/IPv6 address for the UE. The MOGW will assign an IPv4 address or IPv6 address prefix appropriate for the requested APN. It will also create a new entry in the *Gi forwarding table* and *Iu-to-Gi forwarding table* that will be used by the Gi forwarding function described in 5.10 and 5.11. A secondary PDP context reuses the parameters from the first (sometimes called Primary) PDP Context including the PDP (IPv4 or IPv6) address but excluding the QoS parameters.

### 4) RAB Assignment Request

This message contains a request to establish a radio channel with certain the RAB parameters relative to the PDP Context requested by the UE. The MOGW must generate a GTP Tunnel Endpoint Identifier (TEID) value for this connection on the Iu according to the procedure described in section 5.6.

### 5) RAB Assignment Response

This is the response to the RAB Assignment Request that identifies whether the radio channels were established or not.

### 6) Activate PDP Context Response

After Step 3 has been completed, the MOGW will issue this Response message to the UE. Once Step 6 is complete, the MOGW must be prepared to receive and appropriately forward packets destined to the IP address of the mobile terminal and, in the reverse direction, forward IP packets sent by the mobile terminal. The forwarding algorithms are described in sections 5.10, 5.11, 5.12 and 5.13.

### 5.5 ACCESS POINT NAMES

The MOGW will allow configuration of Access Point Names (APNs) as defined by 3GPP specifications. These are used to separate packets being transmitted and received on the Gi interface. An APN is in a sense a logical subdivision (sub-interface) of the Gi interface which is identified by a name. An example is the APN "mobileapn.companyx.com" to identify the corporate connectivity service to Company x, or "wap.operator.com" to identify the wap service. The mobile terminal will activate a PDP Context (data connection) in which it will specify an APN to identify the service it wants to connect to.

The MOGW configures an address range (hereafter called address pool) on every APN to be used to assign IP addresses to UEs. The mobile terminal may receive a different address possibly through a different addressing mechanism depending on the APN it connects to. The MOGW can perform separate IP forwarding on different APNs. This means that logically a separate IP routing table exists for every APN coupled to some form of physical traffic separation such as IEEE 802.1q VLAN or MPLS.

Since the APN identifies services or corporates, the same APN may exist on multiple MOGWs. Therefore address prefixes for each APN need to be efficiently distributed between MOGWs. The method to achieve this is described in section 5.14.

Furthermore the APNs and relative address prefixes must be assigned to one or more physical Gi interfaces (e.g. Ethernet) or logical Gi interfaces (e.g. IPsec) on the MOGW device. In particular in Figure 4 the APN called "internet.operator.net" may be configured on both interfaces Gi-1 and Gi-2. If the APN had a certain amount Z of addresses assigned to it, the MOGW is able to automatically assign a portion of those addresses to interface Gi-1 and a portion to Gi-2. Such a portion of addresses may be any percentage of Z.

### 5.6 GTP Tunnel Endpoint Identifier (TEID) Generation

The GTP header contains the GTP Tunnel ID (TEID). When connections are established for mobile users, a specially formatted TEID value is assigned to each by the MOGW. For example, the MOGW sets the value of the TEID to be used when GTP packets are sent from the radio network to the MOGW.

The MOGW uses a special format and the following values to construct the TEID:
- Physical Interface Index: a value which identifies the Gi physical interface (e.g. interface card). This value preferably ranges
- Logical Interface Index: a value which identifies the logical interface (e.g. tunnel interface related to a certain APN)
- Connection Identifier: a value which identifies the specific user's connection, for a given Logical Interface index. The Logical interface together with the Connection identifier uniquely identify the user connection that a packet belongs to when it is received at an Iu or Gn interface. Logical Interface Index and connection identifier can also be used together to obtain the IP address assigned to the UE.
- Format Type flag (T flag): identifies the type of TEID structure which determines the location and structure of the values contained in the TEID
- Forwarding flag (F flag): used by the Iu portion of the Iu-to-Gi and Iu-to-Gn forwarding functions to determine whether the packet should be destined to the Gi or Gn interfaces. When it is equal to zero it identifies the destination as a Gi interface and when it is equal to one it identifies the destination as a Gn interface. The forwarding flag may also be used by the Gn portion of the Gn-to-Iu and Gn-to-Gi forwarding functions to determine whether the packet should be destined to the Iu or Gi interfaces. When it is equal to zero it identifies the destination as a Gi interface and when it is equal to one it identifies the destination as a Iu interface.
- Security flag (S flag): a flag used to determine whether special security processing should be given to the packets carrying the flag. When the flag is set to 1 it identifies the need to perform legal intercept functions on the packet and therefore to copy the packet and forward it appropriately.
- Quality of Service (QoS) Identifier: If QoS processing is required then the QoS identifier can be used together with the above values in order to construct the GTP TEID. The QoS identifier determines the QoS characteristics of that packet.

The MOGW can obtain the above values by inspecting the GTP TEID that is contained in received packets and it can use these values to perform high-speed processing and forwarding of these packets without requiring the forwarding functions to perform complex table lookups.

In particular such an internal structure of the GTP TEID allows the implementation of an intelligent fast forwarding mode in the Iu-to-Gi forwarding function (500 in Figure 5). It is enough for the Iu-to-Gi forwarding function to inspect the combined Physical and Logical Interface Indexes to be able to process the packet and forward it to the appropriate outgoing interface. Without this special format the forwarding decision would require a costly lookup on a forwarding table which slows down the performance and requires large memory to store the forwarding table.

The GTP internal structure can be used by the MOGW for internal scheduling purposes, so as to give higher priority to a certain APN's traffic over other traffic.

It is also possible to obtain the IP address or address prefix assigned to the UE simply by combining the Logical Interface Identifier and Connection Identifier. This would require the IP address or address prefix to be chosen together with the GTP TEID. Such an easy method to determine the mobile user's IP address from the GTP TEID contents allows a fast ingress filtering check to be performed on all packets incoming from the Iu interface. If ingress filtering is enabled, the source address or address prefix of the IP packet encapsulated in the GTP header is checked against the IP address or address prefix obtained from the GTP TEID. If they match then the packet is forwarded appropriately, otherwise the packet is discarded.

The exact TEID structure can be generated automatically by the MOGW. The MOGW must be configured with the APNs, the expected number of mobile users per APN and the corresponding physical interfaces. Using these parameters the MOGW can generate the GTP TEID structure that will be used to construct the TEIDs.

The size in bits of each of the parameters described above that form the GTP TEID can vary from zero bits to the whole size of the GTP TEID (in this case 32 bits). The GTP TEID is taken to be 32 bits long although it is possible to apply the same method to TEIDs of greater or smaller bit sizes. Examples of the internal TEID structure in accordance with the present invention are given in the following sections.

### 5.6.1 GTP Tunnel Endpoint Identifier (TEID) Format Type 1

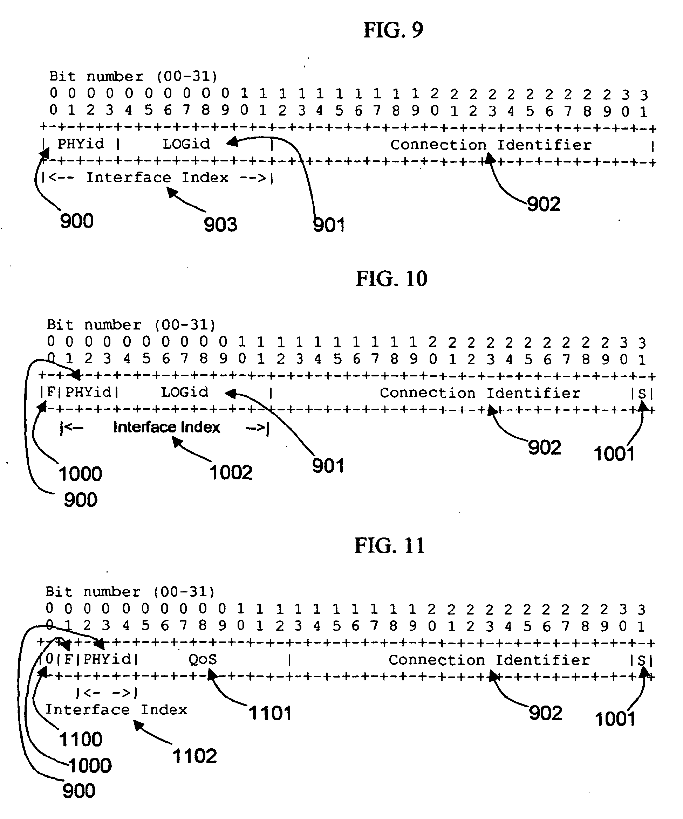

A first example of the TEID structure in accordance to this invention is illustrated in Figure 9. We call this Format Type 1. The TEID is 32 bits long and the bits are numbered from left to right in the figure. Three values are used to generate the TEID, namely the Physical Interface Index 900 (PHYid), Logical Interface Index 901 (LOGid) and the Connection Identifier 902. The concatenation of the Physical Interface Index 900 and the Logical Interface Index 901 forms the Interface Index 903. A description of the bit-wise location and bit size of these values is given below:
- Bits 00-02: Physical Interface Index (3 bits). This allows a maximum of 8 physical Gi interfaces.
- Bits 03-10: Logical Interface Index (8 bits). This allows 254 logical interfaces per physical interface.
- Bits 11-31: Connection Identifier (21 bits). This allows 2097152 mobile user connections for each combination of physical and logical interface.

### 5.6.2 GTP Tunnel Endpoint Identifier (TEID) Format Type 2

A second example of the TEID structure in accordance to this invention is illustrated in Figure 10. We call this Format Type 2. The TEID is 32 bits long and the bits are numbered from left to right in the figure. Five values are used to generate the TEID, namely the Forwarding flag 1000 (F), the Physical Interface Index 900 (PHYid), the Logical Interface Index 901 (LOGid), the Connection Identifier 902 and the Security Flag 1001 (S). The concatenation of the Physical Interface Index 900 and the Logical Interface Index 901 forms the Interface Index 1002. A description of the bit-wise location and bit size of these values is given below:
- Bit 00: Forwarding Flag. The flag is used by the Iu forwarding function to determine the packet should be destined to the Gi, Gn or Iu interfaces.
- Bits 01-03: Physical Interface Index (3 bits). This allows a maximum of 8 physical Gi, 8 physical Gn and 8 physical Iu interfaces.
- Bits 04-11: Logical Interface Index (8 bits). This allows 254 logical interfaces per physical interface.
- Bits 12-30: Connection Identifier (19 bits). This allows 524288 mobile user connections for each combination of physical and logical interface.
- Bit 31: S flag (security flag). Used to identify the need to perform special legal intercept functions on the packet.

### 5.6.3 GTP TEID Format Type 3

A third example of the TEID structure in accordance to this invention is illustrated in Figure 11. We call this Format Type 3. The TEID is 32 bits long and the bits are numbered from left to right in the figure. Five values are used to generate the TEID, namely the Format Type flag set to zero 1100 (T), the Forwarding flag 1000 (F), the Physical Interface Index 900 (PHYid), the Quality of Service identifier 1101 (QoS), the Connection Identifier 902 and the Security Flag 1001 (S). The concatenation of the Physical Interface Index 900 and the Logical Interface Index 901 forms the Interface Index 1102. A description of the bit-wise location and bit size of these values is given below:
- Bit 00: Format Type Flag (T). Determines the format of the TEID structure. In this case it is equal to zero (1100) and always identifies the default APN, therefore no logical index is required.
- Bit 01: Forwarding Flag. This is used by the Iu forwarding function to determine whether the packet should be destined to the Gi or Gn interfaces. When it is equal to zero it identifies the destination as a Gi interface and when it is equal to one it identifies the destination as a Gn interface.
- Bits 02-04: Physical Interface Index (3 bits). This allows a maximum of 8 Gi (if "F" flag is zero) or Gn (if "F" flag is one) interfaces..
- Bits 05-12: Quality of Service (8 bits). This corresponds to the Internet Protocol's Diffserv Code Point (DSCP) field. This field may be reduced down to one bit depending on the number of QoS levels required.
- Bits 13-30: Connection Identifier (18 bits). This allows 262144 mobile user connections for each combination of physical and logical interface.
- Bit 31: S flag security flag. Used to identify the need to perform special legal intercept functions on
the packet.

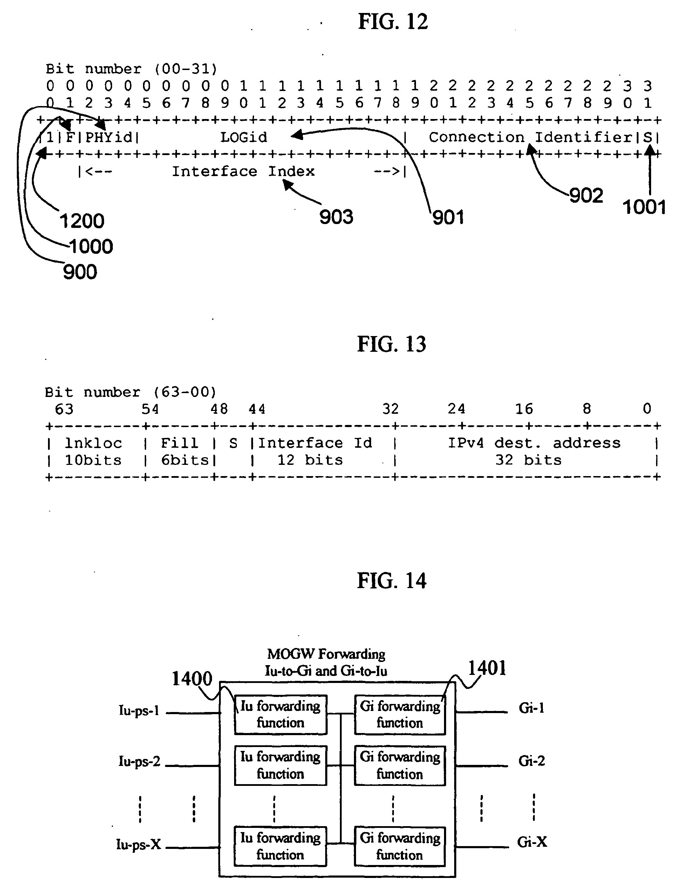

When the Format Type flag (T) is set to one the format of the TEID structure is different as shown in Figure 12. A description of the bit-wise location and bit size of these values is given below:
- Bit 00: Determines the format of the TEID structure. In this case it is equal to one (1200) and is used for special APNs, therefore a logical index is required to identify the specific APN. It is assumed in this case that the QoS is implicitly the same for all mobile users on the same APN (e.g. corporate users belonging to the same corporate).
- Bit 01: Forwarding Flag. This is used by the Iu forwarding function to determine whether the packet should be destined to the Gi or Gn interfaces. When it is equal to zero it identifies the destination as a Gi interface and when it is equal to one it identifies the destination as a Gn interface. This flag is always set to zero and ignored in the Gi-to-Iu direction.
- Bits 02-04: Physical Interface Index (3 bits). This allows a maximum of 8 Gi (if "F" flag is zero) or Gn (if "F" flag is one) interfaces.
- Bits 05-18: Logical Interface Index (14 bits). This allows 16384 logical interfaces per physical interface.
- Bits 19-31: Connection Identifier (12 bits). This allows 4096 mobile user connections for each combination of physical and logical interface.
- Bit 31: S flag security flag. Used to identify the need to perform special legal intercept functions on the packet.

### 5.7 IPv4 address and IPv6 address prefix representation in the MOGW

The IP address assigned to UE is referred to as PDP Address, here abbreviated as *PDP_addr.* It is stored in the forwarding tables using a special format that allows the use of the same 64-bit PDP Address field in the tables for both IPv4 and IPv6 addresses. The *PDP_addr* field is a 64-bit field. Since IPv6 address prefixes are 64-bit long there is a direct match between *PDP_addr* and IPv6 prefix. However IPv4 addresses are 32-bit long. Figure 13 describes the *PDP_addr* format when it contains IPv4 addresses. This format is used to convert IPv4 address to *PDP_addr* format and vice versa.
- Bits 64 - 54: Lnkloc (10 bits): 1111111010. This is the same as the IPv6 link-local prefix pattern.
- Bits 54 - 48: Fill (6 bits): 111111
- Bits 48 - 44: S. Spare bits (4 bits) set to 0000. When the GTP TEID is of Format Type 3 and the Format Type flag (T) is equal to 1 then S is equal to the 4 highest order bits of the TEID's Interface Index.
- Bits 44 - 32: Interface Id. The Interface index (12 bits) contained in the GTP TEID. In case of GTP TEID Format Type 3, when the Format Type flag (T) is equal to 0 (see Figure 11) then the Interface index is also set to 0. Instead if the GTP TEID is according to Format Type 3 but the Format Type Flag (T) is equal to 1 (see Figure 12) then the Interface index is equal to the lowest 12 bits of the TEID's Interface index.
- Bits 32 - 0: IPv4 dest. address. This is the IPv4 address assigned by the MOGW to the UE or mobile terminal upon PDP Context activation.

Although the foregoing description involves a PDP address length of 64 bits it should be understood that a 128-bit PDP address can easily be implemented. For IPv6 the 128-bit PDP Address would include the whole IPv6 address if a single address is assigned to the mobile user. If a /64 prefix is assigned to the mobile user then the PDP Address is composed of the /64 prefix and the link-local interface identifier assigned during PDP Context activation. For IPv4 the 128-bit address would be the concatenation of the 64-bit format described previously and a dummy 64-bit value.

### 5.8 Forwarding Tables

The MOGW contains and uses eight Forwarding tables to perform the forwarding processes. The forwarding tables are: Gi forwarding table, APN forwarding table, Gn forwarding table, Iu-to-Gi forwarding table, Iu-to-Gn forwarding table, Router Advertisement (RA) forwarding table, Inter-MOGW Connection Mapping (COMA) table and Inter-MOGW Source IP address Mapping (SIPMA) table. Every entry in the tables is composed by different fields such as incoming TEID *(TEID_in),* outgoing TEID *(TEID_out),* PDP address assigned to UE *(PDP_addr)* etc.

Each one of the Forwarding tables is stored in one of the following ways within the MOGW:
1. Centralised storage location
   a)Each table is self-contained
   b) Each table is subdivided into smaller per-APN tables
2. Stored in a location close to the relevant forwarding function that needs to access the forwarding table to process packets. For example the Gi forwarding table can be distributed on the Gi boards (that contain the Gi forwarding functions) and each Gi board will contain the part of the Gi forwarding table that it requires;
   a)Each distributed table is self-contained
   b) Each table is subdivided into smaller per-APN tables

### 5.8.1 Gi Forwarding table

The Gi Forwarding table contains the entries used to forward a packet arriving at the Gi interface. The Gi Forwarding table contains the information that identifies whether the packet should be routed to an RNC (Gi-to-Iu Forwarding), an SGSN (Gi-to-Gn Forwarding) or to another MOGW (inter-MOGW procedure).

The Gi Forwarding table's entries have the following parameters:
- *PDP_addr* is the IP address as defined in 5.7. This field is the search key used to access the Gi forwarding table to determine how to forward packets in the Gi-to-Iu direction
- *TEID_out* is the outgoing TEID for the data plane in the MOGW-to-RNC, MOGW-to-SGSN and MOGW-to-MOGW directions.
- *Target_tr* specifies the forwarding function (including the related target network element e.g. Iu RNC, Gn SGSN, MOGW) and the transport information relative to where the packet should be forwarded. For example, in case of an Iu forwarding function the *Target_tr* parameter contains the Iu transport information that includes RNC Iu IP address and lower layer addresses (e.g. ATM VPI/VCI, Ethernet MAC address).
- *Sec_flag* is the secondary PDP flag. The flag indicates that at least one secondary PDP context is active for that particular PDP address.
- *PPF_flag is* the Paging Flag. If a packet going in MoGW-to-RNC direction is received and the *PPF flag* is set, the conventional 3GPP paging procedure must be initiated. If the Paging flag is set to one then the 4-byte PTMSI must be included in this table.
- *S_flag* is the security flag. This flag indicates that a copy of the packet needs to be sent to an external server for further analysis

The MOGW has either an IP-version independent Gi Forwarding table (containing 64-bit long PDP _addr) or IP-dependent Gi Forwarding tables: Gi IPv6 specific forwarding table (128-bit long PDP_addr) and a Gi IPv4 specific forwarding table (32-bit long PDP_addr).

### 5.8.2 APN Forwarding table

The APN forwarding table contains information regarding each APN configured in the MOGW. Each APN entry contains the following parameters:
- *Apn_idx* is the APN Logical Index. This value corresponds to the Logical Interface Index of the GTP TEID specified in 5.6
- *Tunnel_info* contains the information on the type of traffic separation mechanism used, such as IP-in-IP, IPsec or Ethernet VLAN, and related parameters such as Tunnel source and destination addresses, negotiated keys, VLAN tag and so on
- *Apn_name* is the operators APN name (e.g. "online", "mms")
- *PDP_prefix* stores the IP prefix information (IPv4, IPv6 or both) used for the PDP address assignment including prefix value and the netmask (e.g. for the 3ffe:200::\32 prefix, the prefix value is 3ffe:200 and the netmask is 32)
- *PHYid* stores the list of Gi Physical interface indexes on which the APN is configured.

The APN forwarding table is used to forward appropriately packets to be transmitted on the Gi interface and also to enable a fast ingress filtering mechanism on the In ingress filtering described in 5.9.

### 5.8.3 Gn Forwarding Table

The Gn Forwarding table contains the entry used to route packets arriving at the Gn interface from an SGSN or GGSN. The Gn Forwarding table contains the information on whether the packet should be forwarded to an RNC (Gn-to-Iu Forwarding), or out to the Internet (Gn-to-Gi Forwarding).

The Gn Forwarding table's entries contain the following parameters:
- *TEID_in* is the TEID contained in the GTP packet arriving at the Gn interface
- *TEID_out.* This parameter is used for the case in which the packet needs to be forwarded to the Iu forwarding function. The *TEID_out* represents the GTP TEID to be forwarded to the RNC. In case the packet needs to be forwarded externally onto the Gi then the *TEID_out* is a 4-byte field that resembles the TEID in chapter 5.6 and fully specifies the Gi forwarding interface (TEID's PHYid field) and APN index (TEID's LOGid field).
- *Target_tr* specifies the forwarding function (Iu or Gi) where the traffic should be sent and the transport information. The contents of the transport information are different depending on the forwarding function. For an Iu forwarding function the *Target_tr* parameter contains the Iu transport information that includes RNC Iu IP address and lower layer address (e.g. ATM VPI/VCI, Ethernet MAC address). For the Gi forwarding function the parameter is set to zero (the Gi forwarding function where to send the packet is fully specified in the *TEID_out*'s PHYid field)
- *S_flag* is the security flag. The flag indicates that a copy of the packet needs to be sent to an external server for further analysis.

### 5.8.4 Iu-to-Gi forwarding table

This forwarding table is used for filtering packets received at the Iu interface as well as packets that need to be forwarded to the P-MOGW (see section 5.16). The Iu-to-Gi Forwarding table's entries contain the following parameters:
- *Source_IP* is the packet IP source address used as the forwarding table's search key
- *TEID_in* is the GTP TEID contained in packets received on the Iu interface. This value is carried in the packet's tag appended by the Iu forwarding function. In the inter-MOGW communication case, the *TEID_in* is the same as the connection id used for inter-MOGW communication described in section 5.16.
- *Target_tr* specifies the type of forwarding to be performed and the target network element where the traffic should be sent (MOGW or APN) and the transport information. In case of another MOGW the *Target_tr* parameter contains the transport information that includes MOGW IP address and lower layer address (e.g. ATM VPI/VCI, Ethernet MAC address)
- *S_flag* is the security flag. The flag indicates that a copy of the packet needs to be sent to an external server for further analysis

### 5.8.5 Iu-to-Gn forwarding table

The Iu-to-Gn forwarding table contains the information used to forward packets from an in interface to an SGSN or GGSN. The Iu-to-Gn Forwarding table's entries contain the following parameters:
- *TEID_in* is the incoming GTP TEID that is used as the forwarding table's search key
- *Conn_id_out* is the connection identifier that corresponds to the TEID of the outgoing GTP packet if the packet's destination is an SGSN/GGSN.
- *Target_tr* specifies the type of forwarding to be performed and the target network element (SGSN/GGSN) where the traffic should be sent and the transport information. For example in case of a GGSN the *Target_tr* parameter contains the Gn transport information that includes GGSN IP address and lower layer address (e.g. ATM VPI/VCI, Ethernet MAC address).
- *S_flag* is the security flag. The flag indicates that a copy of the packet will be sent to a server for further analysis

### 5.8.6 Router Advertisement table (RA table)

The *RA forwarding table* is used for neighbour discovery messages that are exchanged between the UE and the MOGW. The *RA forwarding table's* entries contain the following parameters:
- *TEID_in* is the incoming GTP TEID that is used as the table's search key
- *TEID_out* is a 4-byte long parameter that represents the GTP TEID to be appended to IP packets that are to be passed to the In or Gn forwarding function
- *Target_tr* specifies the type of forwarding to be performed and the target network element where the traffic should be sent (in this case an RNC or SGSN) and the transport information. For an RNC the *Target_tr* parameter contains the transport information that includes RNC IP address and In lower layer address (e.g. ATM VPI/VCI, Ethernet MAC address) .

### 5.8.7 Inter-MOGW Connection Mapping table (Inter-MOGW CoMa table)

The *Inter-MOGW CoMa* is located together with the Gi forwarding function of the P-MOGW and the N-MOGW (described in section 5.16.). It is used for forwarding packets based on a connection (or Tunnel) identifier. The *CoMa table* is used in the MOGW when the packet arrives carrying a connection identifier (such as GTP TEID, GRE key, IP option). The forwarding table is responsible for matching the connection identifier with the correct APN. *CoMa tables* are only distributed per location and not per APN (see 5.8).

The *CoMa table's* entries contain the following parameters:
- *Connection_id* is the Connection identifier in the incoming tunnel (GTP, IP-in-IP, GRE). Typically the same as the TEID value for the incoming Iu connection *(TEID _in).* This field is the table search key.
- *APN_idx* is the APN logical index.
- *Target_tr* specifies the type of forwarding to be performed and the target interface where the traffic should be sent (Iu or Gi) and the transport information. In case of Iu direction the *Target_tr* parameter contains the transport information that includes RNC IP address and Iu lower layer address (e.g. ATM VPI/VCI, Ethernet MAC address)
- *S_flag* is the security flag. The flag indicates that a copy of the packet needs to be sent to an external server for further analysis

### 5.8.8 Inter-MOGW Source IP Mapping table (Inter-MOGW SIPMa table)

The *Inter-MOGW SIPMa table* (Source IP address mapping table) is located together with the Gi forwarding function of the MOGW and is used for forwarding the packets based on their source address. The *SIPMa table* is used in the MOGW for forwarding packets that are received from another MOGW (described in section 5.16.) and do not carry a connection identifier (such as GTP TEID, GRE key, IP option). For the case in which a packet is to be transmitted on the Gi, the *SIPMA* table will be used to match the IP source address with the correct APN. For the case in which a packet is received on the Gi and needs to be transmitted to the mobile user, the *SIPMA* table will be used to match the IP source address with the correct Iu forwarding information (GTP TEID, Iu transport information with RNC IP address, VPI/VCI or MAC). *SIPMa tables* are only distributed per location and not per APN (see 5.8).

The *SIPMa table*'s entries contain the following parameters:
- *PDP_addr* is the PDP address defined in 5.7. This field is the table's search key
- *TEID_out* is the GTP TEID to be appended to packets passed to the Iu forwarding function
- *Target_tr* specifies the type of forwarding to be performed and the target network element where the traffic should be sent (Iu or Gi) and the transport information. In the Iu direction case the *Target_tr* parameter contains the transport information that includes the RNC IP address and Iu lower layer address (e.g. ATM VPI/VCI, Ethernet MAC address)
- *S_flag* is the security flag. The flag indicates that a copy of the packet needs to be sent to an external server for further analysis

### 5.9 Iu ingress filtering

The ingress filtering mechanism is used to determine whether the mobile user's packet's have an IP source address that matches the IP address assigned to it during the PDP Context activation procedure. The packet to be filtered is tagged with the TEID and the Logical Interface Index is extracted from it. The Logical Interface Index is used as the search key to perform a lookup in the APN forwarding table to obtain the corresponding PDP address (see section 5.7) as the result. The PDP address found with this procedure is then compared with the IP source address of the packet. If the comparison is positive the packet is forwarded appropriately, otherwise it is discarded. This method increases security by preventing address spoofing security attacks.

### 5.10 I_{U}-ps to G_{I} Processing

The MOGW performs intelligent processing and forwarding of packets received on the Iu-ps and forwards them to the appropriate Gi interface. This can be subdivided in two functions: the Iu forwarding function 1400 and Gi forwarding function 1401 as illustrated in Figure 14. Multiple Iu forwarding and Gi forwarding functions may be used, typically running on one or more computing or network processors. A typical implementation involves a one-to-one mapping between a physical interface card and a forwarding function. For example, one physical Iu-ps interface card containing one or more Iu-ps physical interfaces typically executes one In forwarding function, where the Iu forwarding function runs on a processor physically located on the Iu-ps card.

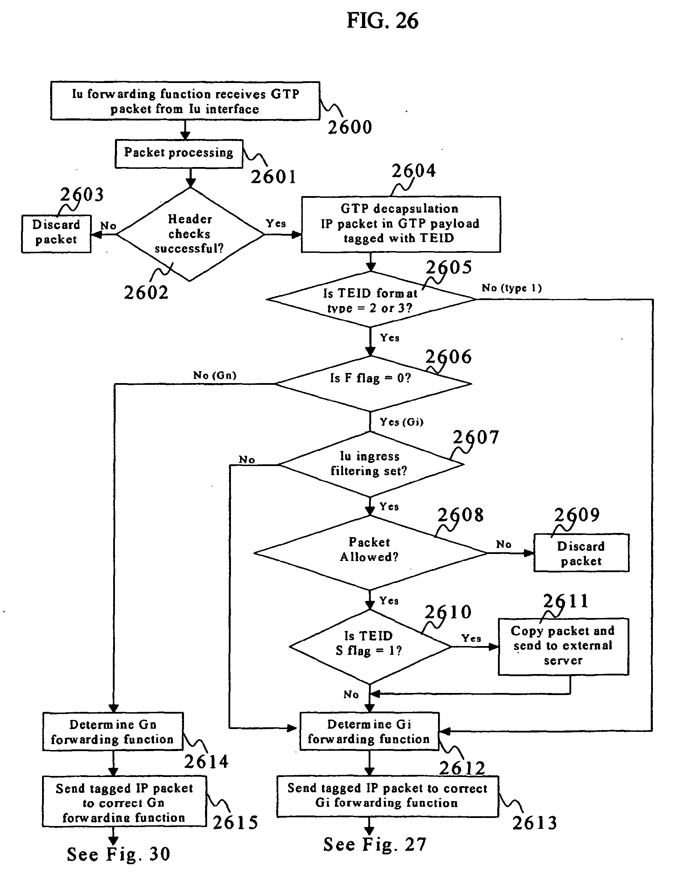

The processing at the Iu forwarding function is described as a flowchart in Figure 26. A GTP Packet is received at the Iu interface in Step 2600 to start this procedure. The GTP, UDP and IP headers are processed in Step 2601. At Step 2602 it is evaluated whether the header checks are successful. If they are not successful ("No" path out of decision step 2602) then the packet is discarded in Step 2603. If they are successful ("Yes" path out of decision step 2602) then the TEID in the GTP header is read, the GTP header is removed and the IP packet carried inside the GTP payload is tagged with the TEID value (Step 2604). The TEID format type is evaluated (Step 2605). If it is not Type 2 or 3 then the procedure jumps to Step 2612. Otherwise if it is Type 2 or 3 ("Yes" path out of decision step 2605) the "F" flag contained in the TEID is checked. In this case the "F" flag must be equal to zero to identify the Gi direction. When the "F" flag is equal to zero then the packet is to be sent to the Gi interface ("Yes" path out of decision step 2606) and it is determined whether the Iu ingress filtering checks should be performed according to the settings in the MOGW. If Ingress Filtering should not be performed ("No" path out of decision step 2607) then the procedure jumps to Step 2612. Otherwise if Ingress filtering should be performed ("Yes" path out of decision step 2607) then the packet's IP source address and TEID are checked to determine if they match the IP source address assigned to the mobile user as described in section 5.9 (Step 2608). If the ingress filtering checks fail ("No" path out of decision step 2608) then the packet is discarded otherwise ("Yes" path out of decision step 2608) if the checks are successful then the packet processing is continued by examining the "S" flag in the TEID (Step 2610). If the "S" flag is set to 1 ("Yes" path out of decision step 2610) then a copy of the packet is sent to an external server for special security checks (step 2611) and processing continues to step 2612. If the "S" flag is set to 0 then processing continues to step 2612 where the Gi function that should process the packet is determined using the Physical Interface Index in the TEID. The IP packet tagged with the TEID is then sent to the appropriate Gi function in step 2613.

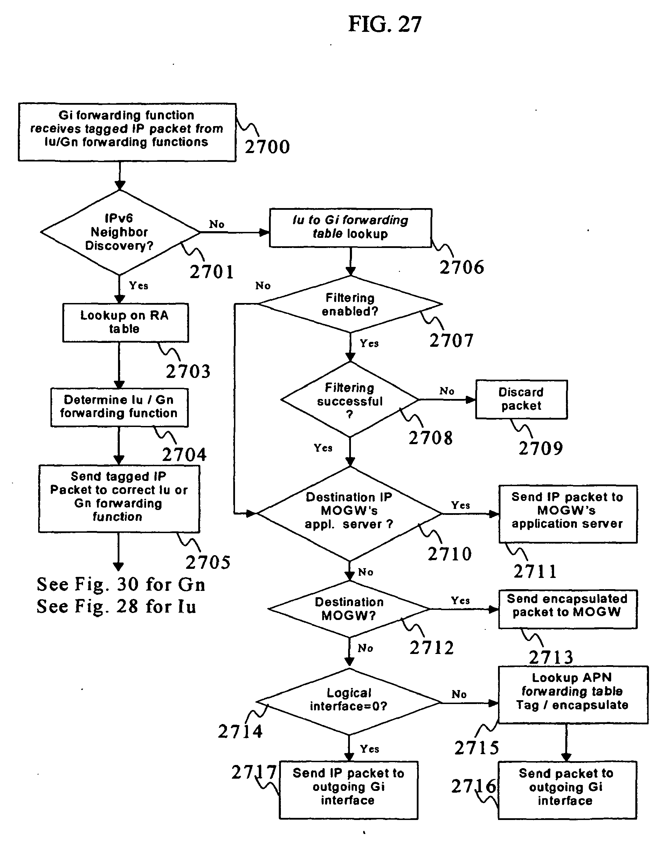

The processing at the Gi forwarding function is described as a flowchart in Figure 27. An IP packet with an appended tag is received by the Gi function in Step 2700 to start the procedure. The packet is then examined to determine whether it is an IPv6 Neighbor Discovery packet (Step 2701).

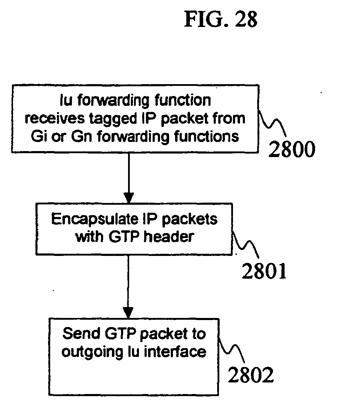

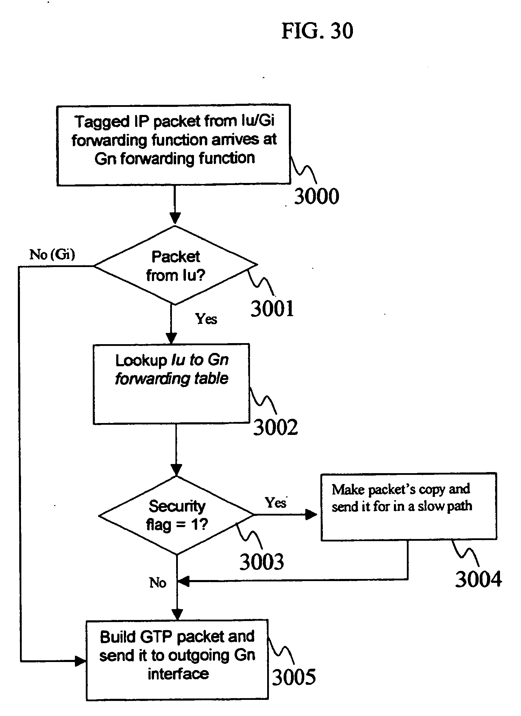

If it is an IPv6 Neighbor Discovery packet ("Yes" path out of decision step 2701) then an appropriate response is prepared in Step 2703. In case of a Router Solicitation then the *Router Advertisement (RA) table* described in section 5.8.6 is looked up using the TEID value to determine the IPv6 prefix to use in the Router Advertisement response, the outgoing TEID and the In transport information. In case of a Neighbor Solicitation only the outgoing TEID *(TEID_out)* and Iu transport information are used. The appropriate outgoing Iu or Gn forwarding function is determined using the Iu transport information descriptor in Step 2704. The IP packet is then tagged using the outgoing TEID (*TEID_out*), Iu transport information and interface type identifier (in this case Iu). The tagged packet is then passed to the appropriate outgoing Iu or Gn forwarding function in 2705. If the packet is passed to the Iu forwarding function the processing algorithm for the Iu forwarding function is illustrated in Figure 28. A tagged IP packet is received by the Iu forwarding function (in this case from the Gi forwarding function) in Step 2800 in Figure 28. The tag is read, removed and the IP packet is encapsulated in GTP, UDP and IP headers (Step 2801) using the TEID and IP values in the tag to build the GTP and IP headers. The resulting GTP packet is then transmitted on the outgoing lu interface using the appropriate connection also identified in the tag (Step 2802). Otherwise if the packet is passed to the Gn forwarding function after Step 2705 in Figure 27 then the Gn forwarding algorithm is performed as illustrated in Figure 30. The tagged IP packet is received by the Gn forwarding function in Step 3000 of Figure 30. A check is made on the packet in Step 3001 to determine whether the packet comes from the In interface. In the specific case of this section the packet comes from the Gi forwarding function, therefore ("No" path out of decision step 3001) the tag is read, removed and the IP packet is encapsulated in GTP, UDP and IP headers using the TEID and IP values in the tag to build the GTP and IP headers. The resulting GTP packet is then transmitted on the outgoing Gn interface (Step 3005).

If the IP packet is not an IPv6 Neighbor Discovery packet ("No" path out of decision step 2701 in Figure 27) the IP packet's source address is used to perform a lookup on the *Iu to Gi forwarding* table in Step 2706. The PDP address described in section 5.7 is used as the search key to perform the look up and the output values are described in 5.8.4. Then in Step 2707 a check is performed to determine whether Gi filtering is enabled. If the Gi Filtering is not enabled ("No" path out of decision step 2707) then the procedure jumps to Step 2710. Otherwise if Gi Filtering is enabled ("Yes" path out of decision step 2707) then the *TEID _in* value obtained from the table lookup is compared with GTP TEID in the packet's tag in step 2708. If the values are not the same ("No" path out of decision step 2708) then the packet is discarded in Step 2709, otherwise if the values are the same ("Yes" path out of decision step 2708) then the packet's IP destination address is examined in step 2710. If the destination address belongs to one of the MOGW's internal server application functions ("Yes" path out of decision step 2710) then the IP packet is internally forwarded to the appropriate IP address of the application server function or card in the MOGW system (see Figure 4). If the destination address does not belong to one of the MOGW's internal server application functions ("No" path out of decision step 2710) then the result of the previous *Iu to Gi forwarding* table lookup *(Target_tr)* in Step 2706 is used to determine whether the packet's destination should be another MOGW in Step 2712. If the packet's destination is another MOGW ("Yes" path out of decision step 2712) then the result from the previous lookup of the *Iu to Gi forwarding* table in Step 2706 (i.e. *Target_tr* and *TEID _in)* are used to forward the packet to the appropriate MOGW (described in 5.16). In particular for inter-MOGW communication, if the *TEID_in* value is zero then the packet is tunnelled using simple IP-in-IP, while values different from zero will indicate that the packet will be sent using the *TEID_in* as tunnel identifier (if GTP-U is used, the *TEID_in* is equal to the TEID, if the GRE tunnel is used the *TEID_in* is equal to the key in the GRE extended header, if IP-in-IP is used the *TEID_in* will be present as an IP header option). If the packet's destination is not another MOGW ("No" path out of decision step 2712) then a check is made to determine what type of forwarding should be performed on the packet in Step 2714. If the Logical Interface in the TEID appended to the packet is equal to zero ("Yes" path out of decision step 2714) then vanilla IP routing is used and the packet is transmitted out from the appropriate Gi physical interface in Step 2717. Otherwise if the Logical Index is different from zero ("No" path out of decision step 2714) then a lookup is made on the APN-forwarding table using the Logical Index as the search key to determine how the packet should be forwarded externally in Step 2715. The appropriate processing will be performed before transmitting the packet on the Gi interface in Step 2716. This processing may involve using an Ethernet VLAN tag.

### 5.11 G_{I} to I_{U}-PS Processing

Just like the Iu-to-Gi processing, the Gi-to-Iu processing is broken down into the same two functions: Iu forwarding and Gi forwarding functions as illustrated in Figure 14. The Gi function 1400 will perform packet reception and processing. It will also perform the forwarding table lookup to determine where to forward the packet. The Iu function 1401 will perform GTP encapsulation and packet transmission.

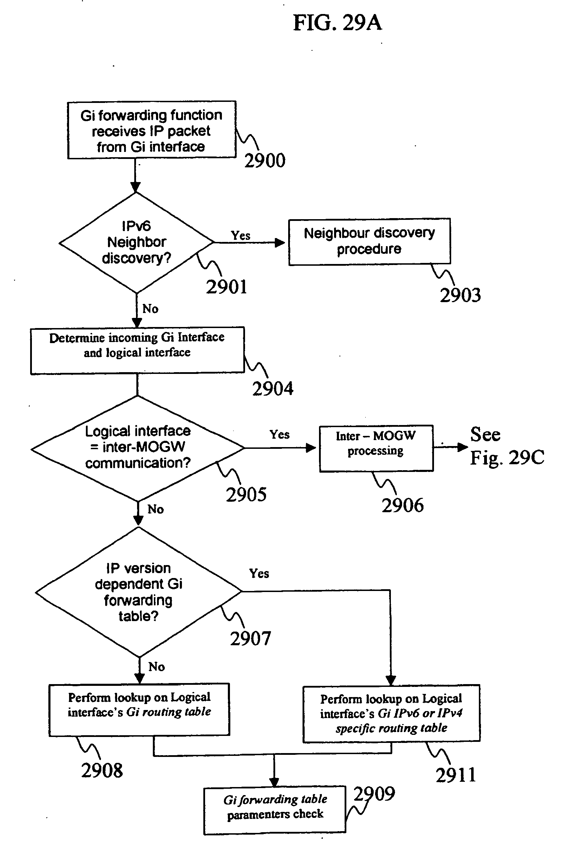

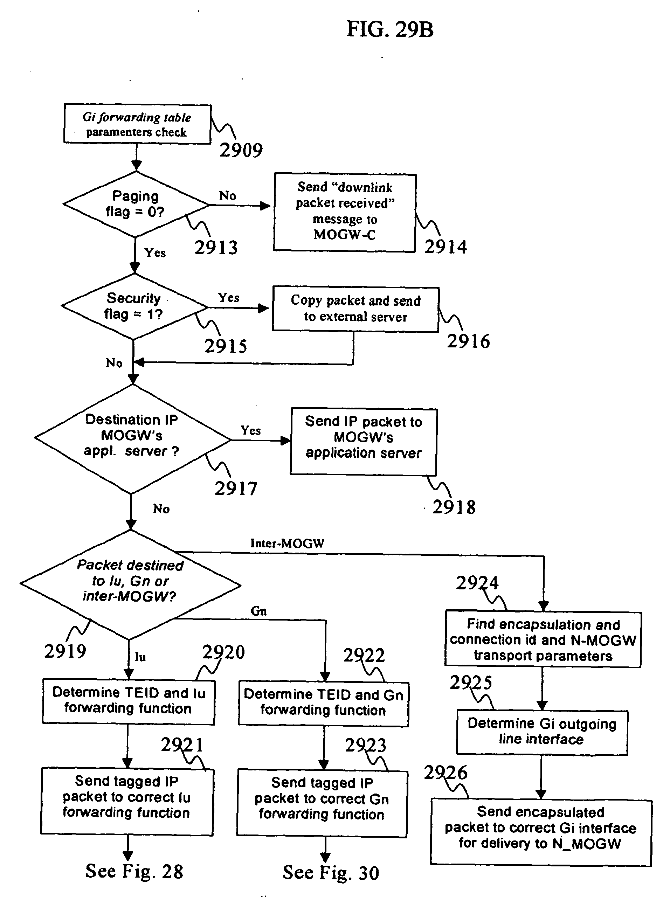

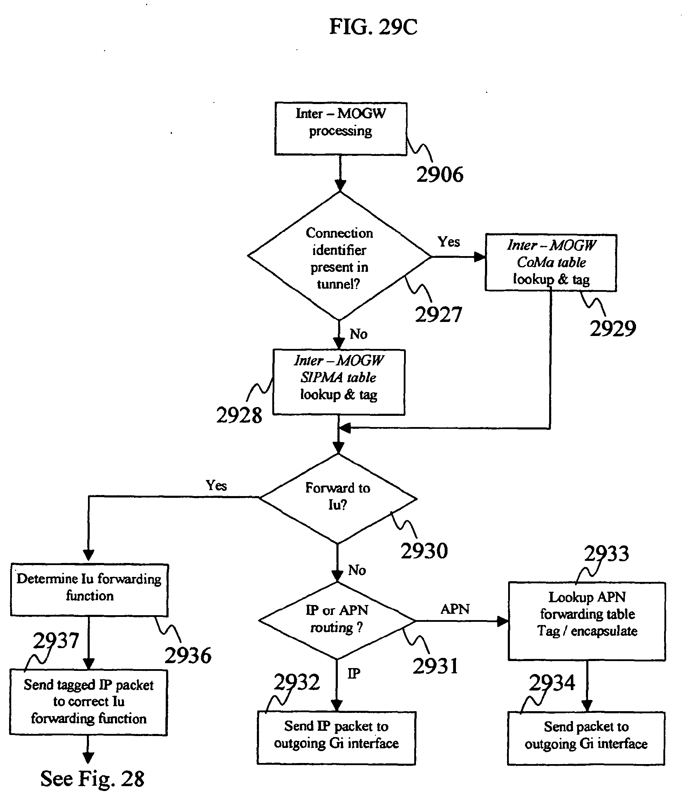

The processing at the Gi forwarding function is described as a flowchart in Figure 29A, B and C. An IP packet is received from the Gi interface by the Gi function in Step 2900 (Figure 29A) to start the algorithm. The packet is then examined to determine whether it is an IPv6 Neighbor Discovery packet (Step 2901).

If it is an IPv6 Neighbor Discovery packet ("Yes" path out of decision step 2901) then an appropriate response is prepared in Step 2903 according to conventional IPv6 procedures.

If the IP packet is not an IPv6 Neighbor Discovery packet ("No" path out of decision step 2901) the incoming logical interface (APN) is determined in Step 2904. The Logical interface may be an Ethernet VLAN or an IP tunnel and it corresponds to an APN as described in chapter 5.5. The logical interface is examined in Step 2905 to determine whether it is used for inter-MOGW communication. If it is used for inter-MOGW communication ("Yes" path out of decision step 2905) then Inter-MOGW processing is performed as described in section 5.11.1 and Figure 29C. Otherwise if the logical interface is not used for inter-MOGW communication ("No" path out of decision step 2905) then a check is made in Step 2907 to determine whether the MOGW is configured with an IP-dependent Gi forwarding table (see section 5.8.1). If IP-dependent Gi forwarding tables are not configured ("No" path out of decision step 2907) then the Gi forwarding table is looked up using Logical Interface identifier and the packet's IP destination address. The result from this lookup is examined in Step 2909 and the algorithm continues as illustrated in Figure 29B. If IP-dependent Gi forwarding tables are configured ("Yes" path out of decision step 2907) then a lookup is performed on the appropriate IPv4 or IPv6 Gi forwarding table using the Logical Interface Identifier and the packet's destination IP address in Step 2911. The result from this lookup is examined in Step 2909 and the algorithm continues as illustrated in Figure 29B.

The results of the Gi forwarding table lookup in Step 2909 are the outgoing TEID (*TEID_out*), paging flag, security flag, transport descriptor *(Target_tr)* that identifies where to forward the packet (Iu, Gn, inter-MOGW) and eventual Iu or Gn transport information (e.g. RNC Iu IP address or SGSN Gn IP address, physical layer information such as ATM VPI/VCI). This information is appended as a tag to the IP packet. After Step 2909 in Figure 29B a check is performed (result from the Gi forwarding table lookup) to determine whether the Paging flag is set to zero (Step 2913). If the Paging flag is set to zero ("Yes" path out of decision step 2913) then an internal instruction message is sent to the MOGW-C (301 in Figure 5) in Step 2914 to inform the control block that the paging procedure must be performed in order to deliver this packet. This message makes the control block start the paging procedure towards the mobile uniquely identified by the PTMSI (also returned as part of the result of the Gi forwarding table lookup in 2908 and 2912). If the Paging flag is not set to zero ("No" path out of decision step 2913) then a check is performed on the results of the Gi forwarding table lookup to determine whether the Security flag is set to one (Step 2915). If the Security flag is set to one ("Yes" path out of decision step 2915) then a copy of the packet is sent to an external server for special security checks (Step 2916) before continuing to Step 2917. If the Security flag is set to zero ("No" path out of decision step 2915) then the processing continues to Step 2917 where a check is made on the packet's destination IP address. If the IP address corresponds to one of the addresses belonging to the MOGW Internal Application Server function ("Yes" path out of decision step 2917) then the IP packet is sent to the internal application server function (Step 2918). Otherwise if the IP address does not correspond to one of the addresses belonging to the MOGW Internal Application Server function ("No" path out of decision step 2917) then a check is made on the packet tag previously obtained from the Gi forwarding table lookup in Step 2919 to determine whether the packet should be sent to the Iu, Gn or Gi forwarding functions. If the result is that the packet should be passed to the Iu forwarding function ("Iu" path out of decision step 2919) then the information in the *Target_tr* is used to determine the outgoing TEID and the corresponding Iu forwarding function in Step 2920. The already tagged packet is then passed to the appropriate In forwarding function in Step 2921. If the result of the decision step 2919 is that the packet should be passed to the Gn forwarding function ("Gn" path out of decision step 2919) then the information in the packet tag is used to determine the outgoing TEID and the corresponding Iu forwarding function in Step 2922. The already tagged packet is then passed to the appropriate Gn forwarding function in Step 2923. Instead if the result of the decision step 2919 is that the packet should be passed to the another MOGW ("MOGW" path out of decision step 2919) then the packet should be handled by the Gi forwarding function as described in Steps 2924, 2925 and 2926. The inter-MOGW encapsulation type, connection identifier and transport parameters are determined by examining the packet's tag in Step 2924. In particular the *TEID_out* is used as inter-MOGW tunnel's connection identifier. The information in *Target_tr* is used to identify the Gi outgoing interface in Step 2925 and the appropriately encapsulated packet is then transmitted out of the appropriate Gi interface towards the other MOGW in Step 2926.

The processing algorithm for the Iu forwarding function is illustrated in Figure 28. A tagged IP packet is received by the Iu forwarding function (in this case from the Gi forwarding function) in Step 2800 in Figure 28. The tag is read, removed and the IP packet is encapsulated in GTP, UDP and IP headers (Step 2801) using the TEID and IP values in the tag to build the GTP and IP headers. The resulting GTP packet is then transmitted on the outgoing Iu interface using the appropriate Iu transport connection also identified in the tag (Step 2802).

### 5.11.1 Inter-MOGW processing of packets coming from Gi forwarding function

Step 2906 in the Gi-to-Iu algorithm description described in Figure 29A refers to the Inter-MOGW packet processing algorithm. This algorithm is described in Figure 29C that is started off by the same Step 2906. The packet is examined in Step 2927 to determine whether it is a tunnelled packet that contains a connection identifier in the tunnel (e.g. GRE) header or as an option in the tunnel's external IP header. The connection identifier is typically the packet's incoming TEID and is not present in ordinary IP-in-IP tunnels. Further information on the tunnelling is provided in section 5.16. Before proceeding the tunnel headers are removed leaving the plain inner IP packet. If the connection identifier is present ("Yes" path out of decision step 2927) then the Inter-MOGW CoMa (Connection Mapping) table is looked up using the connection identifier as the search key. The connection identifier obtained from the result of the table lookup is tagged to the packet before proceeding to Step 2930. Otherwise if the connection identifier is not present and the packet is an ordinary IP-in-IP tunnelled packet ("No" path out of decision step 2927) then the Inter-MOGW SIPMa (Source IP address Mapping) table is looked up using the internal IP packet's source address as the search key. The TEID and transport descriptor obtained from the result of the table lookup is tagged to the packet before proceeding to Step 2930. The result of one of these lookups is used to perform a check in Step 2930 to determine whether the *Target_tr* descriptor (obtained as part of the lookup result) identifies the packet as destined to the Gi or Iu.

If the packet is to be destined to the In ("Yes" path out of decision step 2930) then the packet tag is used to identify the appropriate In forwarding function that should handle the packet in Step 2936, and the tagged IP packet is then passed to the correct Iu forwarding function in Step 2937. The In forwarding function algorithm that follows is illustrated in Figure 28. The tag is read, removed and the IP packet is encapsulated in GTP, UDP and IP headers (Step 2801) using the TEID and IP values in the tag to build the GTP and IP headers. The resulting GTP packet is then transmitted on the outgoing In interface using the appropriate connection also identified in the tag (Step 2802).

If the packet is not to be destined to the Iu ("No" path out of decision step 2930 in Figure 29C) then it has to be destined to the Gi interface. A check is made on the APN logical index (*APN_idx*) in Step 2931 to determine whether plain vanilla IP routing or special APN routing should be performed on the packet. The APN logical index value is returned as a result of the Inter-MOGW SIPMa or CoMa table lookup in Step 2928 or Step 2929. If APN routing should not be performed on the packet ("No" path out of decision step 2932) then the IP packet is transmitted on the outgoing Gi interface using normal IP routing mechanisms. Otherwise if APN routing should be performed on the packet ("Yes" path out of decision step 2932) then the APN Forwarding table is looked up using the APN logical index as the search key in Step 2933. The result will specify the type of packet forwarding, tunnelling or tagging required and after this is performed the packet is transmitted on the Gi interface (Step 2934).

### 5.12 I_{U}-ps to G_{N} processing

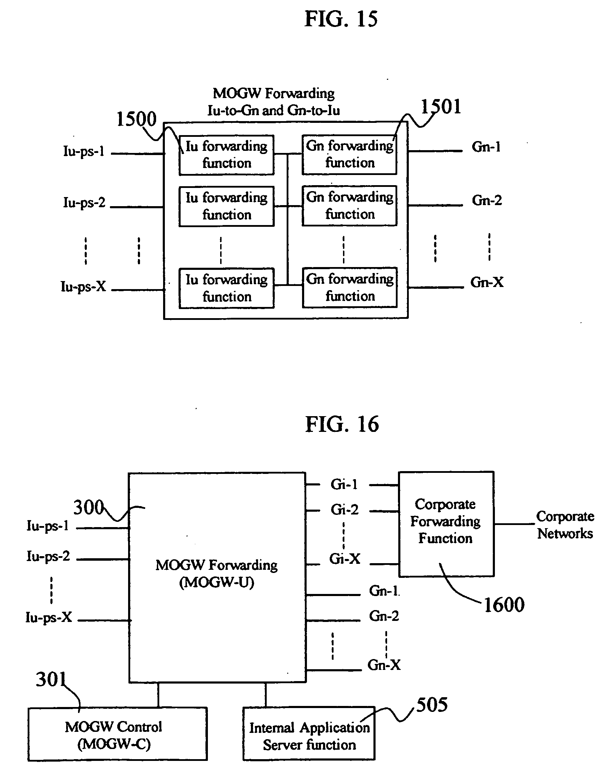

The MOGW performs intelligent processing and forwarding of packets received on the Iu-ps and forwards them to the appropriate Gn interface. This can be subdivided in two functions: the In forwarding function 1500 and the Gn forwarding function 1501 as illustrated in Figure 15. Multiple Iu forwarding and Gn forwarding functions can be used, typically running on one or more computing or network processors. A typical implementation involves a one-to-one mapping between a physical interface card and a forwarding function. For example, one physical Iu-ps interface card containing one or more Iu-ps physical interfaces typically executes one Iu forwarding function, where the Iu forwarding function runs on a processor physically located on the Iu-ps card.

The processing at the Iu forwarding function is described as a flowchart in Figure 26. A GTP Packet is received at the Iu interface in Step 2600 to start this procedure. The GTP, UDP and IP headers are processed in Step 2601. At Step 2602 it is evaluated whether the header checks are successful. If they are not successful ("No" path out of decision step 2602) then the packet is discarded. If they are successful ("Yes" path out of decision step 2602) then the TEID in the GTP header is read, the GTP header is removed and the IP packet carried inside the GTP payload is tagged with the TEID value (Step 2604). The TEID format type is evaluated (Step 2605). In this case the format type must be of type 2 or 3 or similar containing the "F" flag ("Yes" path out of decision step 2605) therefore the "F" flag contained in the TEID is examined. In this case the "F" flag will be zero to identify the Gn direction. If the "F" flag is equal to 0 (zero) then the packet is to be sent to the Gn interface ("No" path out of decision step 2606), the destination Gn forwarding function is determined (Step 2614) using the Physical Interface Index in the TEID and the IP packet is tagged and sent to the appropriate Gn forwarding function (Step 2615).

The processing at the Gn forwarding function is described as a flowchart in Figure 30. The tagged IP packet is received by the Gn forwarding function in Step 3000 of Figure 30. A check is made on the packet in Step 3001 to determine whether the packet comes from the Iu interface. In this specific case the packet comes from the Iu forwarding function, therefore ("Yes" path out of decision step 3001) and a lookup is made on the *Iu-to-Gn forwarding table* using the TEID in the packet's tag as search key. The "S" flag in the result of this lookup is examined in Step 3003. If the "S" flag is equal to one ("Yes" path out of decision step 3003) a copy of the packet is made and sent to an external server for processing (Step 3004) before continuing with Step 3005. Otherwise if the "S" flag is not equal to one ("No" path out of decision step 3003) then Step 3005 is performed. The packet's tag is read, removed and the IP packet is encapsulated in GTP, UDP and IP headers using the TEID and IP values in the tag to build the GTP and IP headers. The resulting GTP packet is then transmitted on the outgoing Gn interface.

### 5.13 G_{N} to I_{U}-PS processing

Just like the Iu-to-Gn processing, the Gn-to-Iu processing is broken down into the same two functions: Iu forwarding and Gn forwarding functions as illustrated in Figure 15. The Gn function 1500 will perform packet reception and processing. It will also perform the Gn to Iu forwarding table lookup to determine where to forward the packet. The In function 1501 will perform GTP encapsulation and packet transmission.

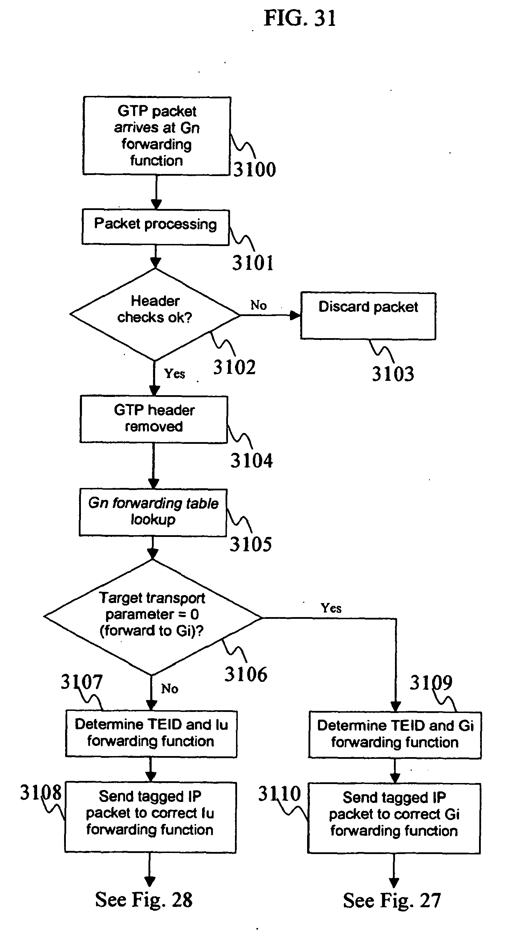

The processing at the Gi forwarding function is described as a flowchart in Figure 31. A GTP Packet is received from the Gn interface in Step 3100 to start this procedure. The GTP, UDP and IP headers are processed in Step 3101. At Step 3102 it is evaluated whether the header checks are successful. If they are not successful (''No'' path out of decision step 3102) then the packet is discarded in Step 3103. If they are successful ("Yes" path out of decision step 3102) then the TEID in the GTP header is read, the GTP header is removed (Step 3104). Then the *Gn Forwarding table* is looked up in Step 3105 using the TEID as the search key. This is done to identify whether the packet should be forwarded to a certain In or Gi forwarding function. To achieve this the *Target-tr* resulting from the lookup is examined in Step 3106.

If *Target_tr* determines that the destination is the Gi ("Yes" path out of decision step 3106) then the result of the lookup will have provided the *TEID_out* that identifies the outgoing TEID connection and the Gi forwarding function that should handle the packet (TEID PHYid field) in Step 3109. The tagged IP packet is then sent to the correct Gi forwarding function and the Gi forwarding function algorithm is performed as illustrated in Figure 27. The Gi forwarding function algorithm flowchart is described in section 5.10.

Otherwise if *Target_tr* determines that the destination is the Iu ("No" path out of decision step 3106) then the result of the lookup will have provided the *TEID_out* that identifies the outgoing TEID connection and the Iu forwarding function that should handle the packet (TEID PHYid field). The IP packet is tagged with the information resulting from the lookup in Step 3105, then sent to the correct Iu forwarding function and the Iu forwarding function algorithm is performed as illustrated in Figure 28. A tagged IP packet is received by the Iu forwarding function (in this case from the Gn forwarding function) in Step 2800 in Figure 28. The tag is read, removed and the IP packet is encapsulated in GTP, UDP and IP headers (Step 2801) using the TEID and IP values in the tag to build the GTP and IP headers. The resulting GTP packet is then transmitted on the outgoing Iu interface using the appropriate Iu transport connection also identified in the tag (Step 2802).

### 5.14 Address Prefix Redistribution and Assignment

Each MOGW will initially be assigned one or more IPv6 and IPv4 prefixes to be used for address assignment to mobile users. These prefixes can broken up into multiple smaller IP prefixes for local storage in the MOGW.

It is possible that at some point one or more of the MOGWs in the same operator's network reach the stage where most of the addresses belonging to the prefixes assigned to them for a certain APN have been used up (i.e. they are currently assigned to mobiles). It is possible to configure the threshold that establishes the point of address exhaustion that will trigger this procedure (example: 70% of assignable addresses are utilised). Such a threshold can be set at any value between 10% and 99% of the available address space per APN. At the same time, due to the typically uneven geographical distribution of mobiles, some MOGWs may have utilised only a small part of the addresses in a certain APN whereas other MOGWs may have reached the address exhaustion threshold for the same APN.

In order to locate the address prefixes where needed this could be done either:
- manually (using studies and measures of where most users will be connecting from and therefore which MOGWs will require more addresses) or
- dynamically by using one of the two mechanisms described in the following sections.

### 5.14.1 Dynamic Address Redistribution Mechanism

In order to perform address prefix redistribution between MOGWs it is possible to use the functions in a new inter-MOGW protocol. The protocol is described in following sections. The requesting MOGW can use the protocol to poll other MOGWs for address prefix availability in the required APN. If any address prefixes are available it will be able to request them to be transferred under its control. Once this prefix transfer procedure has completed the MOGW must immediately start advertising this prefix on the appropriate Gi interface using an IP routing protocol such as the Open Shortest Path First (OSPF) or Border Gateway Protocol (BGP).

### 5.14.2 Dynamic Centralised Address Assignment Mechanism

Instead of redistributing addresses it is possible to allocate address prefixes from a special central address allocation server. When the MOGW is started and configured with APNs it could request address prefixes from this server. As a MOGW reaches the address exhaustion threshold it can then request for more addresses. In all cases when the MOGW receives a new address prefix it must immediately start advertising this prefix on the appropriate Gi interface using an IP forwarding protocol such as the Open Shortest Path First (OSPF) or Border Gateway Protocol (BGP).

The protocol between the MOGW and the address allocation server could be the Dynamic Host Configuration Protocol (DHCP). The conventional DHCP cannot be used as is since it does not support IPv4 address prefix assignment and revocation. For the purpose of this invention the DHCP protocol is extended to support assignment and revocation of an entire address prefix.

### 5.15 Alternative Packet Forwarding Solution for Corporate Mobile Users

In some network configurations there can be several MOGWs and a small number of a certain corporate's address prefixes. Therefore it may be difficult to distribute that corporate's address prefixes between MOGWs as described in section 5.14. A solution for this case involves a new corporate forwarding function that may be implemented as part of one of the MOGWs in the network or as a separate entity as illustrated in Figure 16.

The corporate function 1600 acts as a special type of Mobile Home Agent (HA). The conventional HA on which this is based is described in the Internet Engineering Task Force's Mobile IPv6 (MIPv6) and Mobile IPv4 (MIPv4) specifications. The MOGW-C 301 and MOGW-U 300 functions instead act as a Mobile IP Mobile Node (MN). The corporate function 1600 receives Mobile IP signalling messages from the MOGW-C 301 once a connection (PDP Context) has been requested by a corporate mobile user (UE). The Mobile IP message from the MOGW-C 301 function to the corporate function contains the Home Address, the Care-of Address of the Mobile User (UE) and a special proprietary corporate identifier to identify the exact corporate entity that the mobile user belongs to. The Home Address is the mobile user's address and it may be provided by the corporate mobile user or it may be dynamically assigned by the corporate function. The Care-of address is an address that belongs to the MOGW-U and is configured on of its interfaces towards the corporate function. Finally the corporate identifier determines the specific corporate APN.

When the Mobile IP Registration Request (MIPv4) or Binding Update (MIPv6) message is sent from the MOGW and received by the corporate function 1600 it contains the corporate identifier and may contain a Home Address. This Home Address would have been the same as the IP address requested by the mobile user during PDP Context Activation phase. If the Home Address is present and has not already been assigned to another mobile user (with the same corporate identifier e.g. company X) then a Mobile IP response message will be sent back to the MOGW-C 301 and the exchange will be completed successfully. If the address is already in use then the procedure fails and needs to be repeated with another address. However if the mobile user does not request a specific IP address during PDP Context activation, then the Home Address is not present in the Mobile IP Registration Request or Binding Update message. Instead a corporate identifier is always present in the Mobile IP Registration Request or Binding Update message. This is achieved by enhancing Mobile IP messages between MOGW-C and the corporate function with a special extension containing the corporate identifier (APN) which the Mobile IP messages are related to. The Corporate function will use the corporate identifier to assign the appropriate Home Address to the mobile user and return it to the MOGW in the Mobile IP Registration Reply or Binding Acknowledgement.

This procedure establishes an IP-in-IP tunnel between the MOGW and the corporate function. The corporate function will advertise the corporate prefixes using common IP routing protocols. All packets for the corporate mobile user received at the corporate function will be forwarded to the MOGW using the established tunnel, and vice versa. When a corporate mobile user moves between MOGWs, the tunnel information and the tunnel itself will be transferred from the old to the new MOGW.

The corporate function is a special type of Mobile IP Home Agent because it has the ability to receive incoming packets through the IP-in-IP tunnel with the MOGW and transmit them through the appropriate IPsec tunnel to the corporate's security gateway or to a leased line to a corporate network. The same procedure occurs in the opposite direction. In order to identify packets sent by mobile users belonging to different corporates the tunnelled packets include a corporate identifier. This can be done using GRE tunnelling, where the GRE header contains the corporate identifier, or by introducing an IPv6 option header to contain the corporate identifier.

The IP-in-IP tunnel could also be replaced with bidirectional VLAN tagging between MOGW-U and Corporate function. This also requires a change to Mobile IP messages between MOGW-C and the corporate function. The modified Mobile IP messages contain a VLAN tag identifier field that logically replaces the standard Mobile IP care-of address.

### 5.16 Inter-MOGW mobility

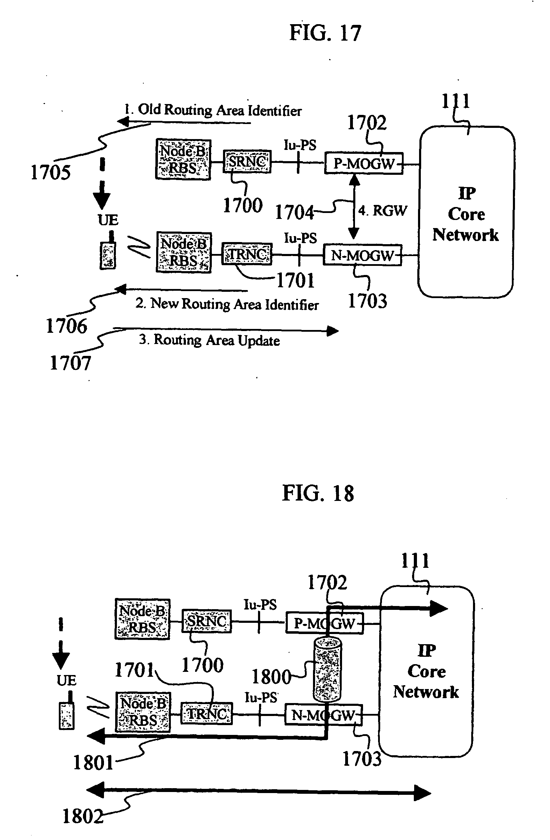

When a mobile terminal (UE) moves between two RNCs that are connected to different MOGWs then the Inter-MOGW procedure is performed. This procedure is needed to maintain connectivity between the mobile terminal and external IP networks it may be communicating with as it moves. As illustrated in Figure 17 the mobile moves between an SRNC 1700 (Source RNC) connected to P-MOGW 1702 (Previous MOGW) to the TRNC 1701 (Target RNC) connected to N-MOGW 1703 (New MOGW).

There are two main Inter-MOGW Mobility cases which are initiated by the following events:
- Simple Mobility: The MOGW receives a Routing Area Update (RAU) or combined Routing Area/Location Area (RAU/LAU) containing a Routing Area Identifier (RAI) which is different from any of its own RAIs. No preceding SRNS Relocation signalling message was received for this mobile terminal on the Iu-ps interface.
- Anticipated Mobility: The MOGW (P-MOGW) receives a SRNS Relocation Required message from the RNC on the Iu-ps interface. This message contains an identifier for the new RNC (using the Target ID) which the mobile terminal will be shortly handed off to.

The first case occurs after the mobile terminal has moved to a new RNC connected to a new MOGW (as described previously). No Iu-ps SRNS Relocation messages are used. The terminal receives a new RAI (part of the broadcast radio system information) which is different from its previously stored RAI. Therefore the mobile terminal determined that it has changed Routing Area and performs the Routing Area Update procedure towards the new MOGW.

In the second case the P-MOGW can determine the address of the TRNC and N-MOGW from the contents of the SRNS Relocation Required message received on the Iu-PS. The P-MOGW is configured with the information necessary to map the content of the "Relocation Required" message to obtain the IP address of N-MOGW.

The MOGWs communicate on the Gi interface and the user traffic forwarding procedures are described as part of the Gi-related forwarding function algorithms.

### 5.16.1 The RGW protocol (Inter-MOGW or Relocate-Gateway protocol)

The RGW mobility management protocol allow for both simple and anticipated mobility scenarios. The protocol creates a tunnel interface between P-MOGW and N-MOGW. It also transfers the mobility management, session management, security and other context information related to the UE from P-MOGW and N-MOGW.

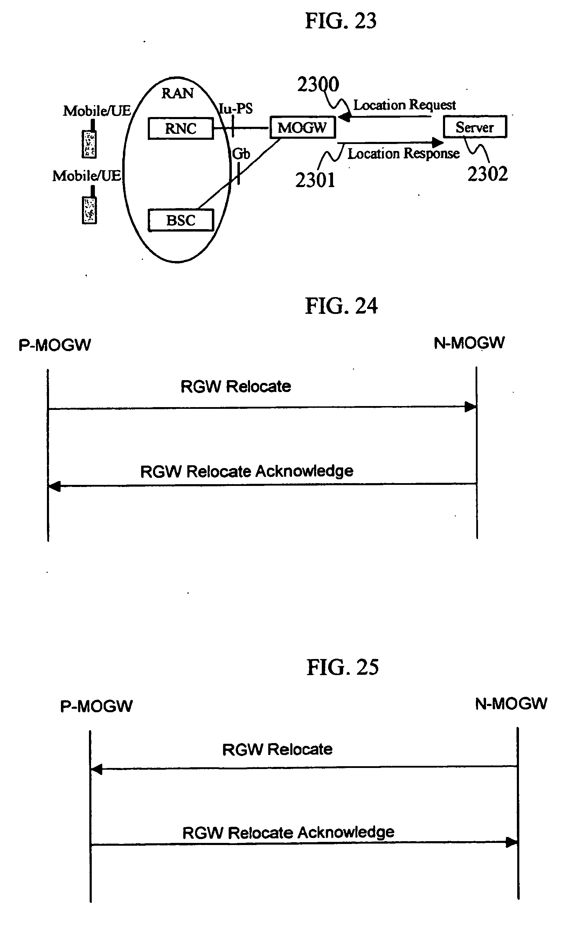

The protocol consists of a single Request-Reply message transfer that can be initiated by either P-MOGW or N-MOGW. The messages are: *Relocate* and *Relocate Acknowledge.* The RGW mobility protocol message flows are illustrated in Figure 24 and Figure 25 respectively for the anticipated and simple mobility scenarios, respectively.

The *Relocate* message contains the following fields:
- *Message Type*: This field identifies whether the message is to start the UE Relocation (create a tunnel), terminate the UE Relocation (remove a tunnel) or start advertising the host router for the host-route case described in section 5.16.2.2
- *Message source:* This field identifies the direction of mobility. That is, whether the message comes from P-MOGW or N-MOGW. This is needed to reuse the same message for anticipated and simple mobility scenarios.
- Menage *id:* This is a message identifier that is unique between the two MOGWs
- *UE_id:* This field contains the IMSI assigned to the UE
- *Tunnelling mechanism:* This field indicates the tunnelling method that should be used (example: IP-in-IP, GRE, proprietary)
- *Tunnel identifier:* This field contains the tunnel identifier used for forwarding purposes that is typically the same as the TEID.
- *Tunnel Lifetime:* This field contains the lifetime of the tunnel
- *IP address:* This field contains an IPv4, IPv6, or both addresses assigned to the UE
- UE context information: This field is only included when the message is being sent from P-MOGW to N-MOGW. The following fields are included in this message:
   ■ *APN*: This field contains the APN
   ■ *APN-properties:* This field contains the APN configuration properties for the purpose of routing
   ■ *Mobility & Session Management, Radio Bearer and Security context:* This field contains all the information regarding the UE's state.
   ■ *Other MOGW context:* This field contains information describing other parameters that are MOGW-specific for the UE. For example this includes the TEID formatting.

The *Relocate Acknowledge* message contains the following fields:
- *Message id:* This contains the same id sent in the UE Relocation message
- *Status*: This field indicates whether the operation was successful and why
- *Tunnel Identifier*: This field contains the tunnel identifier used for forwarding purposes that is typically the same as the TEID.

When this message is sent from P-MOGW it also includes the UE context information described earlier.

### 5.16.2 Simple Inter-MOGW Mobility Procedure

Figure 17 illustrates the simple MOGW Mobility procedure. This procedure is performed if the MOGW receives a RAU message from a UE without having previously received the SRNS Relocation procedure from the UTRAN on the Iu interface for that same UE.

As defined in the 3GPP standards, when the UE moves to the new RNC (NRNC) it will receive the new Routing Area Identifier (RAI) 1706. It compares the old RAI 1705 and new RAI 1706. If they differ the UE determines that it must perform the Routing Area Update (RAU) procedure. The RAU message 1707 sent by the UE will contain the Old RAI.

When the N-MOGW receives the RAU message 1706 it will identify the P-MOGW IP address using the Old RAI it received. The MOGW will use a *RAI table* containing matching RAI and MOGW IP address entries. The N-MOGW 1703 will use the MOGW protocol 1704 to communicate with the P-MOGW 1702 to perform one of the following:
- Tunnel Option: N-MOGW requests the establishment of a tunnel between N-MOGW and P-MOGW. The P-MOGW will confirm the tunnel creation.
- Host-Route Option: N-MOGW sends a request to the P-MOGW to take-over the IP address of the mobile terminal which has moved. The P-MOGW will confirm and pass the ownership of the address to the N-MOGW. The P-MOGW will no longer advertise this address.

The second option is less efficient in certain cases since the time taken for the routing protocol (e.g. OSPF, BGP, IS-IS, RIP) to process the routing advertisement and route traffic to N-MOGW may signify that more data packets will be lost since they will be misrouted to P-MOGW.

The protocol exchange 1704 will also be used to transfer the information regarding the mobile user from P-MOGW to N-MOGW. This includes Session Management, Mobility Management and Security states for the UE. These are transferred to the New MOGW in the "RGW Relocate Acknowledge" message.

### 5.16.2.1 Tunnel Option

The resulting traffic flow after the simple inter-MOGW handoff procedure is illustrated in Figure 18. The tunnel 1800 between N-MOGW 1702 and P-MOGW 1703 will be used for traffic to and from the UE. This will allow the UE to maintain its IP address or addresses for one or more of its ongoing connections.

In the case of IPv6, the UE will form its address based on the prefix received in the prefix option of IPv6 Router Advertisement messages. Immediately after tunnel creation, the N-MOGW will send its own unsolicited Router Advertisement to the IPv6 UE. This will allow the UE to obtain a new IPv6 address belonging to the address prefix assigned to the N-MOGW. New connections (e.g. web browser sessions) will use this new address or addresses. Note that the P-MOGW will not send its Router Advertisements to the UE over the tunnel interface. The UE may also have long-lasting connections which were started when it was connected to the P-MOGW. The UE will continue using the old IPv6 address belonging to the P-MOGW address space until these sessions are closed (e.g. Voice over IP call is terminated). Communication will be maintained by using the tunnel 1800. This is traffic flow 1801. After session termination the old address will not be used any more since the Router Advertisement containing the prefix option relative to this address is no longer received, according to conventional IPv6 behaviour. At this point the IPv6 traffic flow becomes 1802.

The same is not possible in IPv4 since, typically, the IPv4 address is not formed using Router Advertisements. Therefore for IPv4 communication in the inter-MOGW scenario, tunnel 1800 will always be used until either a) the PDP Context is deactivated by the mobile user b) the PDP Context is deactivated by the MOGW. The MOGW may deactivate the PDP Context when it determines that it has not been utilised for a certain amount of time. When a new PDP Context is activated it will create a traffic flow according to 1802.

### 5.16.2.2 Host-Route Option

According to the procedure already described in 5.16.2, the N-MOGW sends a request to the P-MOGW to take-over the IP address of the mobile terminal which has moved. The N-MOGW will then advertise a route for the mobile terminal's IP address (e.g. host route) in its routing protocol (e.g. OSPF, BGP) on the Gi interface. When the routing protocol will have propagated in the IP network, traffic to the IP address in question will be routed to N-MOGW instead of the P-MOGW. The resulting traffic flow is shown in Figure 18 as 1802. In this case the tunnel 1800 is not applicable and traffic flow 1801 is also not applicable.

### 5.16.2.3 Complete Protocol Diagram for Simple Inter-MOGW Mobility Procedure

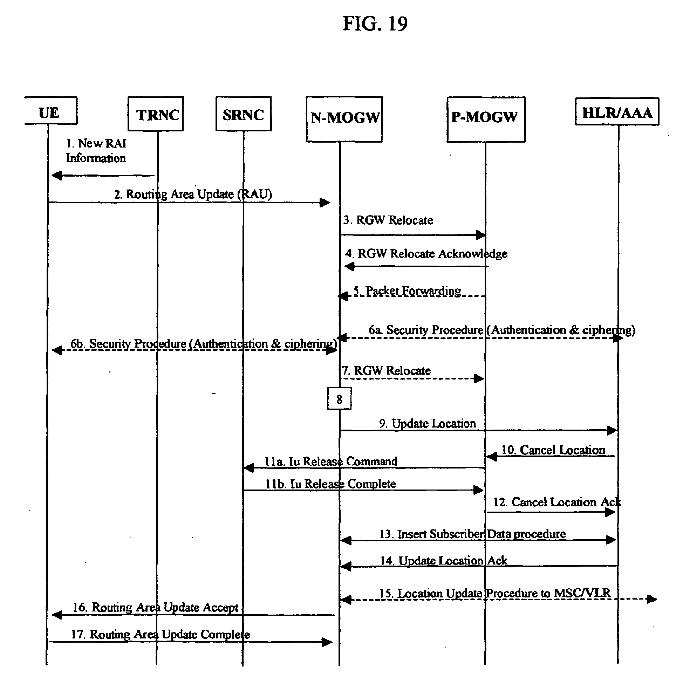

This procedure assumes that the UE receives a new Routing Area Identifier (RAI) which does not belong to the MOGW which it was connected to previously. That is, this is a procedure for Inter-MOGW Mobility. The procedure is illustrated in Figure 19. As described previously the HLR and AAA may be integrated.

Following is a description of the numbered message exchanges in Figure 19:
1) New RAI Information
   This UE receives information that it is now in a new Routing Area identified by the New Routing Area Identifier (RAI).
2) Routing Area Update (RAU)
   A message that is sent by the UE when it receives new RAI information (i.e. it has changed Routing Area).
3) RGW Relocate
   After receipt of a RAU messages indicating an old RAI that does not belong to the New MOGW, the New MOGW uses a new message defined in section 5.16.1. This message is sent from the New to the Old MOGW that is used by the New MOGW and it contains information about the mobile and its connections. It also contains information to establish a tunnel between the Old to New MOGW.
4) RGW Relocate Acknowledge
   This message, if it does not contain an error code, is used by the Old MOGW to indicate to the New MOGW that it is ready to support the mobility procedure and take over packet forwarding and signalling functions for the mobile. This also identifies the successful tunnel establishment between Old and New MOGW. In case where the tunnel establishment was not possible then an Error code describing the reason is returned in this message and the Inter-MOGW procedure is aborted.
5) Packet Forwarding
   When the "Tunnel Option" is used (i.e. set in tunnel mechanism field in RWG Relocate message), the Old MOGW starts tunnelling packets to the New MOGW.
6) Security Procedure (6a/6b)
   May be performed by the New MOGW to perform Authentication and ciphering checks.
7) RGW Relocate
   This is an optional message that is used to terminate the inter-MOGW tunnel and abort the inter-MOGW procedure in case the security procedure had failed.
8) New MOGW "Host Route" Event
   If the "Host Route" option is implemented instead of the "Tunnel Option" then the New MOGW will start advertising the newly acquired host route in its routing protocol advertisements.
9) Update Location
   Message used by the MOGW to update the mobile's location information in the HLR.
10) Cancel Location
   Message to instruct the Old MOGW that the mobile has moved to another location in the core network.
11) Iu Release Command/Complete
   Message use to perform the Iu release procedure which results in the release of the signalling connection between the MOGW and RNC and between RNC and the mobile terminal.
12) Cancel Location Ack
   Message sent by the MOGW to acknowledge the receipt of message 10.
13) Insert Subscriber Data Procedure
   Message used by the MOGW to obtain the subscription information for the specific mobile user
14) Update Location Ack
   Message used to acknowledge the Location Update message number 9.
15) Location Update Procedure to MSC/VLR
   Optional message to update the location information of the mobile also in the Mobile Switching Centre (MSC) and Visiting Location register (VLR).
16) Routing Area Update Accept
   Message sent by the MOGW to the mobile terminal to accept the RAU in step 2.
17) Routing Area Update Complete
   Message sent by the mobile terminal to the MOGW to complete the RAU procedure.

### 5.16.2.4 Tunnel Termination for "Tunnel Option"

The Tunnel between Old MOGW and New MOGW will by default have an infinite lifetime. It should however be terminated when the last of the UE's PDP Contexts (using the address for which the tunnel is established) is deactivated either explicitly (i.e. PDP Context Deactivation) or implicitly (i.e. UE turned off and PDP Context times out in MOGW). In order to terminate the tunnel and allow the Old MOGW to free the address in use (i.e. to allow for its allocation to other users) it is necessary for the New MOGW to inform the Old MOGW of changes in the PDP State to INACTIVE (i.e. PDP Context Deactivated) for the UE in question. The RGW Relocate and RGW Relocate Acknowledge messages are used for this purpose.

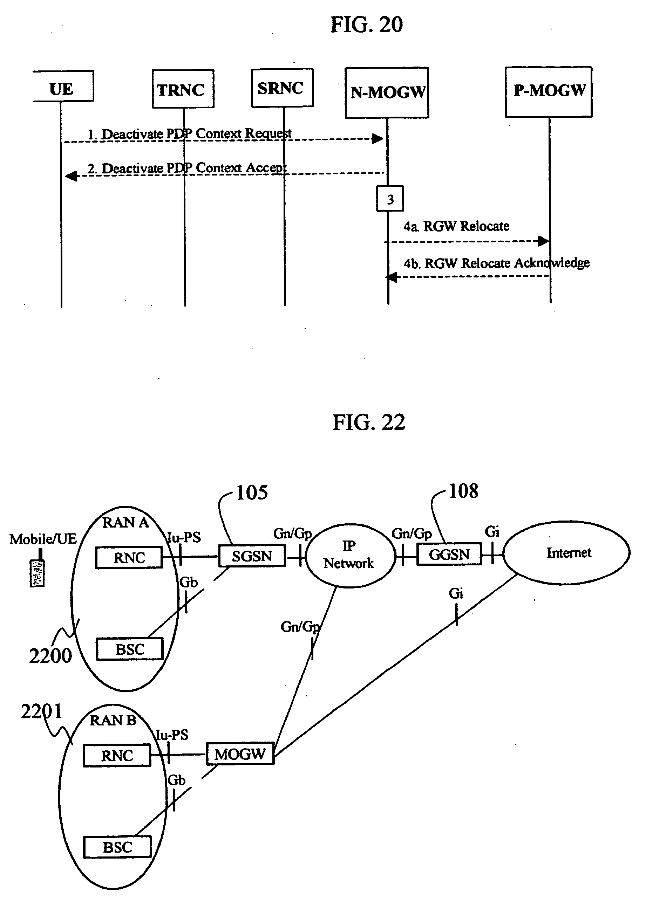

Following is a description of the numbered message exchanges in Figure 20:
1) Deactivate PDP Context Request
   The UE terminates the data connection and Deactivates the primary PDP Context. This may not be performed if the UE is turned off abruptly (e.g. battery removed).
2) Deactivate PDP Context Accept
   The MOGW returns an accept message to the UE.
3) New MOGW Mobility Management Event
   If message 1 is not received, the PDP Context may go to INACTIVE state if no Routing Area update is received within the appropriate time window.
4) RGW Relocate
   This message is sent as a consequence of Message 1 or event 3. The Old MOGW terminates the tunnel when it receives this message. The message type indicates that it is a tunnel termination message and the tunnel lifetime will be zero.
5) RGW Relocate Acknowledge
   This message confirms the termination of the inter-MOGW tunnel.

### 5.16.3 Anticipated Inter-MOGW Mobility Procedure

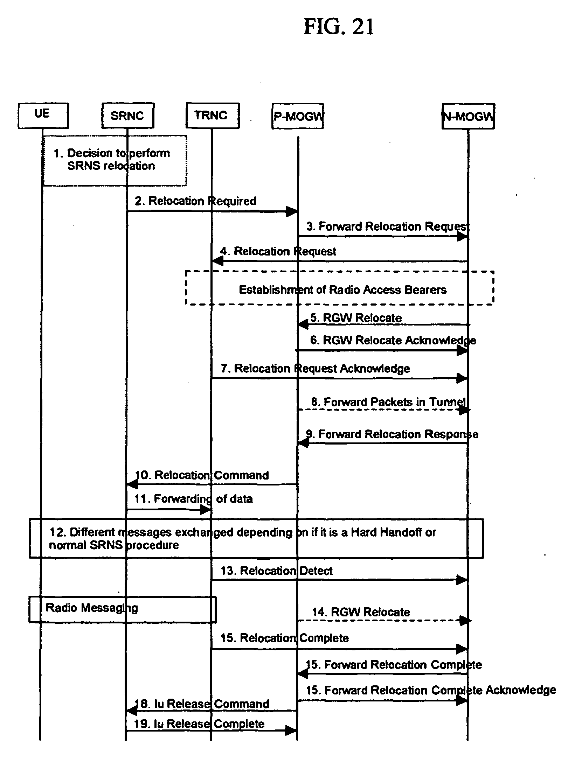

This procedure is performed if the UTRAN supports the SRNS Relocation messages and procedure. If this is not supported then the MOGW reverts to the Simple procedure described in 5.16.2. The concept is to anticipate the tunnel creation before the UE moves between P-MOGW and N-MOGW. The signalling message exchange is illustrated in Figure 21. Following is a description of the numbered exchanges in the figure:
1) The decision is taken to perform SRNS relocation procedure by the radio network (SRNC)
2) The Relocation Required message starts off the SRNS relocation procedure
3) The Forward Relocation Request message is sent by the P-MOGW if the target identifier corresponds to another MOGW (N-MOGW). It contains the information related to the mobile and its data connections.
4) The Relocation Request message is sent by the N-MOGW to the TRNC in order to allocate Iu and RAB resources.
5) The RGW Relocate message is used by the N-MOGW to establish the bidirectional tunnel to the P-MOGW.
6) The RGW Acknowledge message acknowledge the creation of the tunnel between P-MOGW and N-MOGW.
7) The Relocation Request Acknowledge confirms that the necessary Iu and RAB resources have been established.
8) Forward Packets in Tunnel. Packets start being forwarded in the tunnel if the "Tunnel Option" is configured and supported by both P-MOGW and N-MOGW. This can be determined using the information in the RGW Relocate and Relocate Acknowledge messages which are used by the MOGWs to signal support of this option. Packets are "bicasted" or duplicated and sent both to the N-MOGW and to the S-RNC if the appropriate flag is set in the MOGW Handoff Required/Response messages.
9) The Forward Relocation Response message confirms that the N-MOGW is ready to proceed and that the TRNC is ready to receive data from the SRNC.
10) The P-MOGW continues the procedure by using the Relocation Command
11) Forwarding of Data. The SRNC starts forwarding downlink packets for the appropriate RABs to the TRNC.
12) These messages will be different messages according to the type of SRNS relocation performed as defined in 3GPP standards.
13) The Relocation Detect message is sent when the TRNC is ready to start operating as the SRNC.
14) RGW Relocate. When the N-MOGW receives this message in the "Host Route" case it can start advertising the acquired IP addresses in its routing protocols. Otherwise the message instructs the N-MOGW to terminate the tunnel to the P-MOGW.
15) Relocation Complete message is sent by the TRNC to the N-MOGW to signal the completion of the relocation procedure.
16) Forward Relocation Complete message is used by the N-MOGW to inform the P-MOGW that the relocation has been completed.
17) Forward Relocation Complete Acknowledge message confirms the receipt of the Forward Relocation Complete message.
18) Iu Release Command message is sent by the P-MOGW to release the Iu connection.
19) Iu Release Complete message confirms the release of the Iu connection.

### 5.17 MOGW interworking with legacy SGSN and GGSN nodes

As illustrated in Figure 22 the MOGW is able to function within an existing mobile core network composed of SGSN and GGSN nodes. To achieve this the MOGW is able to communicate with SGSN and GGSN nodes in terms of signalling on the Gn or Gp interface and in terms of user traffic forwarding on the Gn or Gp interface. The Gp interface is functionally the same as the Gn interface, with the difference that the Gp interface identifies communication between SGSNs and GGSNs in different operator networks. The latter is widely known as the "roaming" scenario.

When Mobile (UE) moves from a RAN A (2200) connected to SGSN 105 to a RAN B (2201) connected to a MOGW, both for the roaming and non-roaming cases, the MOGW needs to function as an SGSN. When the MOGW is receives one of the following messages it performs signalling on the Gn interface to establish or move the data connection:
- receives a "SGSN Context Request" message on the Gn/Gp interface from the SGSN or
- receives a "Create PDP Context Request" message from the Mobile that contains an APN belonging to a GGSN or
- receives a RAU message over the Iu-ps from the Mobile that contains an APN belonging to a GGSN. The MOGW is able to determine whether the RAI belongs to an SGSN or MOGW by performing a lookup on the *RAI table* that contains a flag in its entries to identify whether it is an SGSN or MOGW RAI.

If one of the above occurs the MOGW generates a TEID value as described in section 5.6 and is able to start forwarding packets according to the forwarding functionality specified earlier.

### 5.18 Location-based Service

It is well established that a trusted external entity may request the location information of a mobile user from the mobile network. However the MOGW provides more advanced services.

Future services based on interactivity of mobile users located in the same geographical area or nearby do not always need to request the actual location of the mobile users. This makes it easier to maintain the location privacy of mobile users. As illustrated in Figure 23, an external entity such as a Server 2302 can for example request from the MOGW whether two mobile users are located in the same geographical area. The mobile user will be identified in the Location Request (2300) by using either the Internal Mobile Subscriber Identity (IMSI) or the mobile phone number (otherwise named MSISDN). The size of the geographical area, for example in terms of the radius of a circle in hundreds of meters, may also be specified by the requesting external entity. The Server 2302 may in addition request the MOGW to inform it of any changes for a certain period of time. The MOGW answers the Location Request message 2300 using a Location Response message 2301 containing either the location information or the result of the query regarding the vicinity of two mobile users. The MOGW may also send additional spontaneous Location Response messages if requested by the Server to update it if the information in the response changes during a certain time period.

### 5.19 Push Service

The MOGW is able to receive and process specially formatted packets from external entities (e.g. on Internet) that need to be "pushed" to the mobile user. This may happen, for example, when the mobile user wants to receive information on commercial offers or local news relative to its current geographical location. These "push" packets are IPv4 or IPv6 packets with a special information "tag" that identifies them as special packets and contains the mobile terminal's IMSI or MSISDN. One way to implement such a tag is using an extension header in the case of IPv6.

## Claims

1. A method of routing data packets between a packet data network (PDN) and a mobile device (UE) in a radio access network (RAN), wherein the network includes a gateway node (MOGW) having one or more physical interfaces for communicating data from and to the packet data network using a Gi interface, and one or more physical interfaces for communicating data from and to the radio access network, the method comprising:
- assigning an identifier (TEID) to a wireless connection between the mobile device (UE) and the radio access network (RAN); said identifier comprising:
o a physical interface identifier (900) for identifying a Gi physical interface among said physical interfaces for communicating data from and to said packet data network;
o a logical interface identifier for identifying a logical interface which is used to communicated data packets from and to said packet data network using said Gi interface; and
o a connection identifier (902) for identifying a wireless connection for the mobile device (UE)associated with the physical interface and logical interface; transmitting the identifier to the radio access network;
- assigning a data network address to the mobile device; and
- providing at least one forwarding table comprising the data network address and the identifier; and
- forwarding the data packet between the mobile device and the packet data network based on the network address and the identifier, wherein the forwarding is made using the Gi interface and the radio access network interface.

2. The method according to claim 1, including ingress filtering the data packet received from the mobile device (UE) which comprises the step of:
- extracting the logical interface identifier from the identifier (TEID) associated to the packet;
- using said logical interface identifier as a search key to look up in said forwarding table to obtain the network address of the data packet;
- comparing said obtained network address with the source address of the packet; and
- discard the packet if the comparison is negative.

3. The method according to any preceding claim, wherein the identifier comprises:
- a format identifier (11 00) for identifying sizes of the interface identifier and the connection identifier;
- a Quality of Service identifier (1101) for describing the quality of the wireless connection; and/or
- a security identifier (1001) for identifying whether the wireless connection requires ingress filtering security.

4. The method according to any preceding claim, wherein the forwarding table includes:
- the data network address;
- the identifier;
- information for identifying a lower layer transport for forwarding the packets;
- a security flag for identifying whether ingress filtering is to be performed on data packets;
- a secondary packet data control (PDP) context flag for identifying whether further filtering is required to determine on which wireless connection the packets are to be forwarded;
- information for describing a tunnelling mechanism to be used for forwarding the packets; and/or
- information for identifying a physical interface on which the packets are to be forwarded.

5. The method according to any preceding claim, wherein the at least one forwarding table comprises a set of forwarding tables comprising:
- a data network interface (Gi) forwarding table comprising information for forwarding packets received on a data network interface (Gi);
- an access point name (APN) forwarding table comprising information regarding each APN;
- a core network interface (Gn) forwarding table comprising information for forwarding packets received on a core network interface (Gn);
- an access interface to data network interface (lu-to-Gi) forwarding table comprising information for forwarding packets received on an access interface (lu) and destined for the packet data networks (PDNs) or gateway nodes (MOGW) on the packet data network interface (Gi);
- an access interface to core network interface (lu-to-Gn) forwarding table comprising information for forwarding packets received on the access interface (lu) and destined for serving GPRS support nodes (SGSNs) or gateway GPRS support nodes (GGSNs) on the core network interface (Gn);
- a router advertisement forwarding table comprising information for IPv6 neighbor discovery functions; and/or
- an inter gateway node (MOGW) connection mapping table and/ or inter- MOGW source IP address mapping table used for forwarding packets based on their IP source address.

6. The method according to any preceding claim, wherein the forwarding table including information for forwarding packets received on an access interface (lu) and destined for the packet data networks (PDNs) or gateway nodes (MOGWs) on the data network interface (Gi) or gateway GPRS support nodes on the core network interface (Gn), and the method comprises:
- receiving data packets via the access interface (lu); and
- identifying which of the data packets should be forwarded to one or more PDNs, which packets should be forwarded to a gateway GPRS support node (GGSN) and which of said packets should be forwarded to one or more MOGWs.

7. The method according to any preceding claim, comprising:
- detecting movement of the mobile device to the radio access network from another radio access network;
- transmitting a message to a gateway node associated with the other radio access network, said message comprising the identifier and a request for creation of a data packet tunnel;
- receiving a message from the gateway node for acknowledging creation of the data packet tunnel;
- transmitting data packets originating from the mobile device to the gateway nodevia said data packet tunnel; and
- receiving data packets intended for the mobile device from the gateway node via said data packet tunnel.

8. The method according to any preceding claim, comprising:
- detecting movement of the mobile device from the radio access network to another radio access network;
- transmitting a message to a gateway node associated with the other radio access network, said message comprising information related to the mobile device and requesting the gateway node to establish wireless connections for said mobile device;
- receiving a message from the gateway node, said message comprising the identifier and a request for creation of a data packet tunnel;
- transmitting a message to the gateway node for acknowledging creation of the data packet tunnel;
- transmitting data packets intended for said mobile device to the gateway node via said data packet tunnel; and
- receiving data packets originating from the mobile device from the gateway node via said data packet tunnel.

9. The method according to any preceding claim, comprising:
- receiving a message from another gateway node, said message comprising information related to the mobile device and requesting the gateway node to establish wireless connections for said mobile device;
- transmitting a message to the gateway node for acknowledging creation of the data packet tunnel;
- transmitting data packets intended for said mobile device to the gateway node via said data packet tunnel; and
- receiving data packets originating from the mobile device from the gateway node via said data packet tunnel.

10. The method according to any one of claims 7 to 9, wherein detecting movement of the mobile device from the radio access network to another radio access network comprises the gateway node receiving a routing area update message and/ or a serving radio network subsystem (SRNS) relocation required message.

11. The method according to any one of claims 7 to 10, wherein the data packet tunnel comprises the identifier.

12. The method according to any one of claims 7 to 11, wherein said message comprises:
- a message identifier;
- the identifier;
- information for describing the data packet tunnel; and
- information for describing the wireless connection.

13. The method according to any preceding claim, comprising:
- communicating with packet switched devices in accordance with third generation universal mobile telecommunications services (UMTS) standards and GTP protocol.

14. A gateway node (MOGW) for routing data packets between a packet data network (PDN) and a mobile device (UE) in a radio access network (RAN), comprising:
- one or more physical interfaces for communicating data from and to the packet data network using a Gi interface, and one or more physical interfaces for communicating data from and to the radio access network,
- means for assigning an identifier (TEID) to a wireless connection between the mobile device and the radio access network; said identifier comprising:
o a physical interface identifier (900) for identifying a Gi physical interface among said physical interfaces for communicating data from and to said packet data network;
o a logical interface identifier for identifying a logical interface which is used to communicated data packets from and to said packet data network using said Gi interface; and
o a connection identifier (902) for identifying a wireless connection for the mobile device (UE) associated with the physical interface and logical interface;
- means for communicating the identifier to the radio access network;
- means for assigning a network address to the mobile device;
- means for storing at least one forwarding table comprising the network address and the identifier;
- means for forwarding the data packet between the mobile device and the packet data network based on the network address and the identifier, wherein the forwarding is made using the Gi interface and the radio access network interface.

15. The gateway node (MOGW) according to claim 14, comprising:
- means for tagging a data packet with the identifier; and
- means for transmitting the data packet according to the at least one forwarding table and the identifier; and/or
- means for receiving a tagged data packet; and
- means for processing the data packet according to the at least one forwarding table and the identifier.

16. The gateway node (MOGW) according to claim 14 or 15, including one or more interface configured to communicate with a home location register (HLR) using an authentication interface (Gr).

17. The gateway node (MOGW) according to any one of claims 14 to 16, comprising:
- a plurality of interface cards or blades; wherein the forwarding table is divided between and stored on one or more interface cards or blades and a controlling means for creating and updating the forwarding table is stored on another interface card.

18. The gateway node (MOGW) according to any one of claims 14 to 17, wherein the forwarding means comprise an access interface (lu) forwarding means and data network interface (Gi) forwarding means.

19. The gateway node (MOGW) according to any one of claims 14 to 18, wherein said means are distributed on different interface cards or blades.

20. The gateway node (MOGW) according to any one of claims 14 to 19, wherein signaling messages conform to second and third generation mobile phone standards and may include attach, detach, routing area update, activate PDP context, deactivate PDP context, SRNS relocation and lu release messages.

21. The gateway node (MOGW) according to any one of claims 14 to 20, wherein
- the radio access network (RAN) includes a radio network controller (RNC) and node B in accordance with a third generation UMTS standard.

22. The gateway node (MOGW) according to any one of claims 14 to 21, wherein:
- the radio access network (RAN) includes base station controller (BSC) in accordance to second generation GSM standard and/or EDGE standard.

## Patentansprüche

1. Verfahren zum Leiten von Datenpaketen zwischen einem Paketdatennetzwerk (PDN) und einem mobilen Gerät (UE) in einem Funkzugriffnetzwerk (RAN), wobei das Netzwerk einen Zugangsknoten (MOGW) umfasst, der eine oder mehrere physikalische Schnittstellen zum Übertragen von Daten von und zu dem Paketdatennetzwerk unter Verwendung einer Gi-Schnittstelle aufweist, und eine oder mehrere physikalische Schnittstellen zum Übertragen von Daten von und zu dem Funkzugangsnetzwerk aufweist, wobei das Verfahren umfasst:
- Zuweisen einer Kennung (TEID) zu einer drahtlosen Verbindung zwischen dem mobilen Gerät (UE) und dem Funkzugangsnetzwerk (RAN), wobei besagte Kennung umfasst:
• eine physikalische Schnittstellenkennung (900) zum Identifizieren einer Gi-physikalischen Schnittstelle aus besagten physikalischen Schnittstellen zum Übertragen von Daten von und zu besagtem Paketdatennetzwerk;
• eine logische Schnittstellenkennung zum Identifizieren einer logischen Schnittstelle, die zur Übertragung von Datenpaketen von und zu besagtem Paketdatennetzwerk unter Verwendung besagter Gi-Schnittstelle verwendet wird; und
• eine Verbindungskennung (902) zum Identifizieren einer drahtlosen Verbindung für das mobile Gerät (UE), die der physikalischen Schnittstelle und der logischen Schnittstelle zugeordnet ist; Übertragen der Kennung an das Funkzugangsnetzwerk;
- Zuweisen einer Datennetzwerkadresse zu dem mobilen Gerät; und
- Bereitstellen von zumindest einer Weiterleitungstabelle, die die Datennetzwerkadresse und die Kennung umfasst; und
- Weiterleiten des Datenpakets zwischen dem mobilen Gerät und dem Paketdatennetzwerk, basierend auf der Netzwerkadresse und der Kennung, wobei die Weiterleitung unter Verwendung der Gi-Schnittstelle und der Funkzugangsnetzwerkschnittstelle vorgenommen wird.

2. Verfahren nach Anspruch 1, umfassend eine Ingress-Filterung des Datenpakets, das von dem mobilen Gerät (UE) empfangen wurde, was den folgenden Schritt beinhaltet:
- Gewinnen der logischen Schnittstellenkennung aus der Kennung (TEID), die zu dem Paket gehört;
- Verwenden der besagten logischen Schnittstellenkennung als ein Suchbegriff zum Nachschlagen in besagter Weiterleitungstabelle, um die Netzwerkadresse des Datenpakets zu erhalten;
- Vergleichen der erhaltenen Netzwerkadresse mit der Quelladresse des Pakets; und
- Verwerfen des Pakets, falls der Vergleich negativ ausfällt.

3. Verfahren nach einem der vorhergehenden Ansprüche, wobei die Kennung umfasst:
- eine Formatkennung (11 00) zum Identifizieren von Größen der Schnittstellenkennung und der Verbindungskennung;
- eine Dienstqualitätskennung (11 01) zum Beschreiben der Qualität der drahtlosen Verbindung; und/oder
- eine Sicherheitskennung (1001) zum Identifizieren, ob die drahtlose Verbindung eine Ingress-Filterungs-Sicherheit benötigt.

4. Verfahren nach einem der vorhergehenden Ansprüche, wobei die Weiterleitungstabelle enthält:
- die Datennetzwerkadresse;
- die Kennung;
- Informationen zum Identifizieren eines Transports in einer niedrigeren Schicht zum Weiterleiten der Pakete;
- einen Sicherheitsindikator zum Identifizieren, ob eine Ingress-Filterung der Datenpakete durchgeführt werden muss;
- einen Indikator, der im Zusammenhang mit einer sekundären Paketdatensteuerung (PDP) steht, um zu identifizieren, ob eine weitere Filterung notwendig ist, um zu bestimmen, über welche drahtlose Verbindung die Pakete weitergeleitet werden sollen;
- Informationen zum Beschreiben eines Tunnelmechanismus, der für die Weiterleitung der Pakete verwendet werden soll; und/oder
- Informationen zum Identifizieren einer physikalischen Schnittstelle, über welche die Pakete weitergeleitet werden sollen.

5. Verfahren nach einem der vorhergehenden Ansprüche, wobei die zumindest eine Weiterleitungstabelle einen Satz von Weiterleitungstabellen umfasst, wobei der Satz von Weiterleitungstabellen umfasst:
- eine Weiterleitungstabelle für Datennetzwerkstellen (Gi), umfassend Informationen zum Weiterleiten von Paketen, die über eine Datennetzwerkschnittstelle (Gi) empfangen wurden;
- einen Weiterleitungstabelle für Zugriffspunktnamen (APN), umfassend Informationen bezüglich jedes APN;
- eine Weiterleitungstabelle für Kernnetzwerkschnittstellen (Gn), umfassend Informationen zum Weiterleiten von Paketen, die über eine Kernnetzwerkschnittstelle (Gn) empfangen wurden;
- eine Weiterleitungstabelle für Übertragungen von Zugangsschnittstelle zu Datennetzwerkschnittstelle (lu-to-Gi), umfassend Informationen zum Weiterleiten von Paketen, die über eine Zugangsschnittstelle (lu) empfangen wurden und die für die Paketdatennetzwerke (PDNs) oder Zugangsknoten (MOGW) auf der Paketdatennetzwerkschnittstelle (Gi) bestimmt sind;
- eine Weiterleitungstabelle für Übertragungen von Zugangsschnittstelle zu Kernnetzwerkschnittstelle (lu-to-Gn), umfassend Informationen zum Weiterleiten von Paketen, die über die Zugangsschnittstelle (lu) empfangen wurden und die für bedienende GPRS-Unterstützungsknoten (SGSNs) oder GPRS-Unterstützungszugangsknoten (GGSNs) auf der Kernnetzwerkschnittstelle (Gn) bestimmt sind;
- eine Routerankündigungsweiterleitungstabelle, umfassend Informationen für IPv6 Nachbar-Auffindungsfunktionen; und/oder
- eine Zuweisungstabelle für Verbindungen zwischen Zugangsknoten (MOGW) und/oder eine Zuordnungstabelle für Zwischen-MOGW-Quell-IP-Adressen, die zum Weiterleiten von Paketen basierend auf deren IP-Quelladressen verwendet wird.

6. Verfahren nach einem der vorhergehenden Ansprüche, wobei die Weiterleitungstabelle Informationen zum Weiterleiten von Paketen umfasst, die über eine Zugangsschnittstelle (lu) empfangen wurden und für die Paketdatennetzwerke (PDNs) oder Zugangsknoten (MOGWs) auf der Datennetzwerkschnittstelle (Gi) oder GPRS-Unterstützungszugangsknoten auf der Kernnetzwerkschnittstelle (Gn) bestimmt sind, und das Verfahren umfasst:
- Empfangen von Datenpaketen über die Zugangsschnittstelle (lu); und
- Identifizieren, welches der Datenpakete zu einem oder mehreren PDNs weitergeleitet werden soll, welche Pakete zu einem GPRS-Unterstützungszugangsknoten (GGSN) weitergeleitet werden sollen und welche der besagten Pakete zu einem oder mehreren MOGWs weitergeleitet werden sollen.

7. Verfahren nach einem der vorhergehenden Ansprüche, umfassend:
- Erkennen einer Bewegung des mobilen Geräts von einem anderen Funkzugangsnetzwerk zu dem Funkzugangsnetzwerk;
- Übertragen einer Nachricht an einem Zugangsknoten, der dem anderen Funkzugangsnetzwerk zugeordnet ist, wobei besagte Nachricht die Kennung und eine Anforderung zum Erzeugen eines Datenpakettunnels umfasst;
- Empfangen einer Nachricht von dem Zugangsknoten zur Bestätigung der Erzeugung des Datenpakettunnels;
- Übertragen von Datenpaketen, die von dem mobilen Gerät stammen, an den Zugangsknoten über besagten Datenpakettunnel; und
- Empfangen von Datenpaketen, die für das mobile Gerät bestimmt sind, von dem Zugangsknoten über besagten Datenpakettunnel.

8. Verfahren nach einem der vorhergehenden Ansprüche, umfassend:
- Erkennen einer Bewegung des mobilen Geräts von dem Funkzugangsnetzwerk zu einem anderen Funkzugangsnetzwerk;
- Übertragen einer Nachricht an einen Zugangsknoten, der dem anderen Funkzugangsnetzwerk zugeordnet ist, wobei besagte Nachricht Informationen bezüglich des mobilen Geräts und eine Anforderung an den Zugangsknoten zum Aufbau einer drahtlosen Verbindung zu besagtem mobilen Gerät umfasst;
- Empfangen einer Nachricht von dem Zugangsknoten, wobei besagte Nachricht die Kennung und eine Anforderung zur Erzeugung eines Datenpakettunnels umfasst;
- Übertragen einer Nachricht an den Zugangsknoten zur Bestätigung der Erzeugung des Datenpakettunnels;
- Übertragen von Datenpaketen, die für das besagte mobile Gerät bestimmt sind, an den Zugangsknoten über besagten Datenpakettunnel; und
- Empfangen von Datenpaketen, die von dem mobilen Gerät stammen, von dem Zugangsknoten über besagten Datenpakettunnel.

9. Verfahren nach einem der vorhergehenden Ansprüche, umfassend:
- Empfangen einer Nachricht von einem anderen Zugangsknoten, wobei besagte Nachricht Informationen bezüglich des mobilen Geräts umfasst und den Zugangsknoten zum Aufbau von drahtlosen Verbindungen für besagtes mobiles Gerät auffordert;
- Übertragen einer Nachricht an den Zugangsknoten zum Bestätigen des Aufbaus des Datenpakettunnels;
- Übertragen von Datenpaketen, die für besagtes mobiles Gerät bestimmt sind, an den Zugangsknoten über besagten Datenpakettunnel; und
- Empfangen von Datenpaketen, die von dem mobilen Gerät stammen, von dem Zugangsknoten über besagten Datenpakettunnel.

10. Verfahren nach einem der Ansprüche 7 bis 9, wobei das Erkennen einer Bewegung des mobilen Geräts von dem Funkzugangsnetzwerk zu einem anderen Funkzugangsnetzwerk umfasst, dass der Zugangsknoten eine Aktualisierungsnachricht bezüglich der Routing-Bereiche und/oder eine Anforderungsnachricht zum Relokalisieren eines bedienenden Funknetzsubsystems (SRNS) empfängt.

11. Verfahren nach einem der Ansprüche 7 bis 10, wobei der Paketdatentunnel die Kennung umfasst.

12. Verfahren nach einem der Ansprüche 7 bis 11, wobei besagte Nachricht umfasst:
- eine Nachrichtenkennung;
- die Kennung;
- Informationen zum Beschreiben des Datenpakettunnels; und
- Informationen zum Beschreiben der drahtlosen Verbindung.

13. Verfahren nach einem der vorhergehenden Ansprüche, umfassend:
- Kommunizieren mit Paket-vermittelnden Geräten, entsprechend den dritten Generation universellen mobilen Telekommunikationsservice (UMTS) Standards und dem GTP-Protokoll.

14. Zugangsknoten (MOGW) zum Leiten von Datenpaketen zwischen einem Paketdatennetzwerk (PDN) und einem mobilen Gerät (UE) in einem Funkzugangsnetzwerk (RAN), umfassend:
- eine oder mehrere physikalische Schnittstellen zum Übertragen von Daten von und zu dem Paketdatennetzwerk unter Verwendung einer Gi-Schnittstelle, und eine oder mehrere physikalische Schnittstellen zum Übertragen von Daten von und zu dem Funkzugangsnetzwerk,
- Mittel zum Zuweisen einer Kennung (TEID) zu einer drahtlosen Verbindung zwischen dem mobilen Gerät und dem Funkzugangsnetzwerk, wobei besagte Kennung umfasst:
• eine physikalische Schnittstellenkennung (900) zum Identifizieren einer Gi-physikalischen Schnittstelle aus den besagten physikalischen Schnittstellen zum Übertragen von Daten von und zu besagtem Paketdatennetzwerk;
• eine logische Schnittstellenkennung zum Identifizieren einer logischen Schnittstelle, die dazu verwendet wird, Datenpakete von und zu besagtem Paketdatennetzwerk unter Verwendung besagter Gi-Schnittstelle zu übertragen; und
• eine Verbindungskennung (902) zum Identifizieren einer drahtlosen Verbindung für das mobile Gerät (UE), die der physikalischen Schnittstelle und der logischen Schnittstelle zugeordnet ist;
- Mittel zum Übertragen der Kennung an das Funkzugangsnetzwerk;
- Mittel zum Zuweisen einer Netzwerkadresse zu dem mobilen Gerät;
- Mittel zum Speichern von zumindest einer Weiterleitungstabelle, umfassend die Netzwerkadresse und die Kennung;
- Mittel zum Weiterleiten des Datenpakets zwischen dem mobilen Gerät und dem Paketdatennetzwerk, basierend auf der Netzwerkadresse und der Kennung, wobei die Weiterleitung unter Verwendung der Gi-Schnittstelle und der Funkzugangsnetzwerksschnittstelle vorgenommen wird.

15. Zugangsknoten (MOGW) nach Anspruch 14, umfassend:
- Mittel zum Markieren eines Datenpakets mit der Kennung; und
- Mittel zum Übertragen des Datenpakets gemäß der zumindest einen Weiterleitungstabelle und der Kennung; und/oder
- Mittel zum Empfangen eines markierten Datenpakets; und
- Mittel zum Verarbeiten des Datenpakets gemäß der zumindest einen Weiterleitungstabelle und der Kennung.

16. Zugangsknoten (MOGW) nach Anspruch 14 oder 15, enthaltend eine oder mehrere Schnittstellen, die eingerichtet sind, unter Verwendung einer Authentifizierungsschnittstelle (Gr) mit einem Verzeichnis des Heimatorts (HLR) zu kommunizieren.

17. Verbindungsknoten (MOGW) nach einem der Ansprüche 14 bis 16, umfassend
- eine Vielzahl von Schnittstellenkarten oder Einschüben; wobei die Weiterleitungstabelle zwischen einer oder mehreren Schnittstellenkarten oder Einschüben aufgeteilt und auf diesen gespeichert ist und ein Steuerungsmittel zum Erzeugen und Aktualisieren der Weiterleitungstabelle auf einer anderen Schnittstellenkarte gespeichert ist.

18. Zugangsknoten (MOGW) nach einem der Ansprüche 14 bis 17, wobei die Weiterleitungsvorrichtung ein Weiterleitungsmittel für Zugangsschnittstellen (lu) und ein Weiterleitungsmittel für Datennetzwerkschnittstellen (Gi) umfasst.

19. Verbindungsknoten (MOGW) nach einem der Ansprüche 14 bis 18, wobei besagte Mittel auf verschiedenen Schnittstellenkarten oder Einschüben verteilt sind.

20. Verbindungsknoten (MOGW) nach einem der Ansprüche 14 bis 19, wobei Signalisierungsnachrichten konform zu der zweiten und dritten Generation der Mobilfunkstandards sind und Nachrichten zum Anfügen, zum Entfernen, zum Routingbereichsupdate, zur Aktivierung eines PDP-Zusammenhangs, zur Deaktivieren eines PDP-Zusammenhangs, zur SRNS-Relokalisierung und zur lu-Freigabe enthalten können.

21. Verbindungsknoten (MOGW) nach einem der Ansprüche 14 bis 20, wobei:
- das Funkzugangsnetzwerk (RAN) eine Funknetzwerkssteuereinrichtung (RNC) und einen Node B gemäß einer dritten Generation UMTS-Standard enthält.

22. Verbindungsknoten (MOGW) nach einem der Ansprüche 14 bis 21, wobei:
- das Funkzugangsnetzwerk (RAN) eine Basisstationsteuereinrichtung (BSC) gemäß dem zweiten Generation GSM-Standard und/oder EDGE-Standard enthält.

## Revendications

1. Procédé de routage de paquets de données entre un réseau de données par paquets (PDN) et un dispositif mobile (UE) dans un réseau d'accès radio (RAN), dans lequel le réseau inclut un noeud passerelle (MOGW) ayant une ou plusieurs interfaces physiques pour communiquer des données depuis et vers le réseau de données par paquets en utilisant une interface Gi, et une ou plusieurs interfaces physiques pour communiquer des données depuis et vers le réseau d'accès radio, le procédé comprenant :
- l'affectation d'un identificateur (TEID) à une connexion sans fil entre le dispositif mobile (UE) et le réseau d'accès radio (RAN) ; ledit identificateur comprenant :
- un identificateur d'interface physique (900) pour identifier une interface physique Gi parmi lesdites interfaces physiques pour communiquer des données depuis et vers ledit réseau de données par paquets ;
- un identificateur d'interface logique pour identifier une interface logique qui est utilisée pour communiquer des paquets de données depuis et vers ledit réseau de données par paquets en utilisant ladite interface Gi ; et
- un identificateur de connexion (902) pour identifier une connexion sans fil pour le dispositif mobile (UE) associé à l'interface physique et à l'interface logique ; la transmission de l'identificateur au réseau d'accès radio ;
- l'affectation d'une adresse de réseau de données au dispositif mobile ; et
- la fourniture d'au moins une table de transfert comprenant l'adresse de réseau de données et l'identificateur ; et
- le transfert du paquet de données entre le dispositif mobile et le réseau de données par paquets sur la base de l'adresse de réseau et de l'identificateur, où le transfert est effectué en utilisant l'interface Gi et l'interface de réseau d'accès radio.

2. Procédé selon la revendication 1, incluant le filtrage en entrée du paquet de données reçu du dispositif mobile (UE) qui comprend les étapes consistant à :
- extraire l'identificateur d'interface logique de l'identificateur (TEID) associé au paquet ;
- utiliser ledit identificateur d'interface logique comme une clé de recherche pour la consultation dans ladite table de transfert afin d'obtenir l'adresse de réseau du paquet de données ;
- comparer ladite adresse de réseau obtenue avec l'adresse source du paquet ; et
- rejeter le paquet si la comparaison est négative.

3. Procédé selon l'une quelconque des revendications précédentes, dans lequel l'identificateur comprend :
- un identificateur de format (11 00) pour identifier des tailles de l'identificateur d'interface et de l'identificateur de connexion ;
- un identificateur de Qualité de Service (11 01) pour décrire la qualité de la connexion sans fil ; et/ou
- un identificateur de sécurité (1001) pour identifier si la connexion sans fil requiert une sécurité de filtrage en entrée.

4. Procédé selon l'une quelconque des revendications précédentes, dans lequel la table de transfert inclut :
- l'adresse de réseau de données ;
- l'identificateur ;
- des informations pour identifier un transport de couche inférieure pour transférer les paquets ;
- un drapeau de sécurité pour identifier si un filtrage en entrée doit être effectué sur des paquets de données ;
- un drapeau de contexte de contrôle de données par paquets (PDP) secondaire pour identifier si un filtrage supplémentaire est requis afin de déterminer sur quelle connexion sans fil les paquets doivent être transférés ;
- des informations pour décrire un mécanisme de tunnellisation devant être utilisé pour transférer les paquets et/ou
- des informations pour identifier une interface physique sur laquelle les paquets doivent être transférés.

5. Procédé selon l'une quelconque des revendications précédentes, dans lequel la au moins une table de transfert comprend un ensemble de tables de transfert comprenant :
- une table de transfert d'interface de réseau de données (Gi) comprenant des informations pour transférer des paquets reçus sur une interface de réseau de données (Gi) ;
- une table de transfert de nom de point d'accès (APN) comprenant des informations concernant chaque APN ;
- une table de transfert d'interface de réseau coeur (Gn) comprenant des informations pour transférer des paquets reçus sur une interface de réseau coeur (Gn) ;
- une table de transfert d'interface d'accès à interface de réseau de données (Iu-à-Gi) comprenant des informations pour transférer des paquets reçus sur une interface d'accès (Iu) et destinés aux réseaux de données par paquets (PDN) ou aux noeuds passerelles (MOGW) sur l'interface de réseau de données par paquets (Gi) ;
- une table de transfert d'interface d'accès à interface de réseau cour (Iu-à-Gn) comprenant des informations pour transférer des paquets reçus sur l'interface d'accès (Iu) et destinés aux noeuds de support GPRS de desserte (SGSN) ou aux noeuds de support GPRS de transit (GGSN) sur l'interface de réseau coeur (Gn) ;
- une table de transfert d'annonce de routeur comprenant des informations pour des fonctions de découverte de voisin IPv6 ; et/ou
- une table de mappage de connexion inter-noeud passerelle (MOGW) et/ou une table de mappage d'adresse IP source inter-MOGW utilisées pour transférer des paquets sur la base de leur adresse IP source.

6. Procédé selon l'une quelconque des revendications précédentes, dans lequel la table de transfert incluant des informations pour transférer des paquets reçus sur une interface d'accès (Iu) et destinés aux réseaux de données par paquets (PDN) ou aux noeuds passerelles (MOGW) sur l'interface de réseau de données (Gi) ou aux noeuds de support GPRS de transit sur l'interface de réseau coeur (Gn), et le procédé comprend :
- la réception de paquets de données via l'interface d'accès (Iu) ; et
- l'identification desquels des paquets de données devraient être transférés à un ou plusieurs PDN, desquels paquets de données devraient être transférés à un noeud de support GPRS de transit (GGSN) et desquels desdits paquets devraient être transférés à un ou plusieurs MOGW.

7. Procédé selon l'une quelconque des revendications précédentes, comprenant :
- la détection du déplacement du dispositif mobile vers le réseau d'accès radio depuis un autre réseau d'accès radio ;
- la transmission d'un message à un noeud passerelle associé à l'autre réseau d'accès radio, ledit message comprenant l'identificateur et une demande de création d'un tunnel de paquet de données ;
- la réception d'un message en provenance du noeud passerelle pour accuser réception de la création du tunnel de paquet de données ;
- la transmission de paquets de données provenant du dispositif mobile au noeud passerelle via ledit tunnel de paquet de données ; et
- la réception de paquets de données destinés au dispositif mobile en provenance du noeud passerelle via ledit tunnel de paquet de données.

8. Procédé selon l'une quelconque des revendications précédentes, comprenant :
- la détection du déplacement du dispositif mobile du réseau d'accès radio à un autre réseau d'accès radio ;
- la transmission d'un message à un noeud passerelle associé à l'autre réseau d'accès radio, ledit message comprenant des informations liées au dispositif mobile et demandant au noeud passerelle d'établir des connexions sans fil pour ledit dispositif mobile ;
- la réception d'un message en provenance du noeud passerelle, ledit message comprenant l'identificateur et une demande de création d'un tunnel de paquet de données ;
- la transmission d'un message au noeud passerelle pour accuser réception de la création du tunnel de paquet de données ;
- la transmission de paquets de données destinés audit dispositif mobile au noeud passerelle via ledit tunnel de paquet de données ; et
- la réception de paquets de données provenant du dispositif mobile en provenance du noeud passerelle via ledit tunnel de paquet de données.

9. Procédé selon l'une quelconque des revendications précédentes, comprenant :
- la réception d'un message en provenance d'un autre noeud passerelle, ledit message comprenant des informations liées au dispositif mobile et demandant au noeud passerelle d'établir des connexions sans fil pour ledit dispositif mobile ;
- la transmission d'un message au noeud passerelle pour accuser réception de la création du tunnel de paquet de données ;
- la transmission de paquets de données destinés audit dispositif mobile au noeud passerelle via ledit tunnel de paquet de données ; et
- la réception de paquets de données provenant du dispositif mobile en provenance du noeud passerelle via ledit tunnel de paquet de données.

10. Procédé selon l'une quelconque des revendications 7 à 9, dans lequel la détection du déplacement du dispositif mobile du réseau d'accès radio à un autre réseau d'accès radio comprend le noeud passerelle recevant un message de mise à jour de zone de routage et/ou un message de relocalisation requise de sous-système de réseau radio de desserte (SRNS).

11. Procédé selon l'une quelconque des revendications 7 à 10, dans lequel le tunnel de paquet de données comprend l'identificateur.

12. Procédé selon l'une quelconque des revendications 7 à 11, dans lequel ledit message comprend :
- un identificateur de message ;
- l'identificateur ;
- des informations pour décrire le tunnel de paquet de données ; et
- des informations pour décrire la connexion sans fil.

13. Procédé selon l'une quelconque des revendications précédentes, comprenant :
- la communication avec des dispositifs à commutation de paquets conformément aux normes des services universels de télécommunications mobiles (UMTS) de troisième génération et au protocole GTP.

14. Noeud passerelle (MOGW) pour router des paquets de données entre un réseau de données par paquets (PDN) et un dispositif mobile (UE) dans un réseau d'accès radio (RAN), comprenant :
- une ou plusieurs interfaces physiques pour communiquer des données depuis et vers le réseau de données par paquets en utilisant une interface Gi, et une ou plusieurs interfaces physiques pour communiquer des données depuis et vers le réseau d'accès radio,
- des moyens pour affecter un identificateur (TEID) à une connexion sans fil entre le dispositif mobile et le réseau d'accès radio ; ledit identificateur comprenant :
- un identificateur d'interface physique (900) pour identifier une interface physique Gi parmi lesdites interfaces physiques pour communiquer des données depuis et vers ledit réseau de données par paquets ;
- un identificateur d'interface logique pour identifier une interface logique qui est utilisée pour communiquer des paquets de données depuis et vers ledit réseau de données par paquets en utilisant ladite interface Gi ; et
- un identificateur de connexion (902) pour identifier une connexion sans fil pour le dispositif mobile (UE) associé à l'interface physique et à l'interface logique ;
- des moyens pour communiquer l'identificateur au réseau d'accès radio ;
- des moyens pour affecter une adresse de réseau au dispositif mobile ;
- des moyens pour stocker au moins une table de transfert comprenant l'adresse de réseau et l'identificateur ;
- des moyens pour transférer le paquet de données entre le dispositif mobile et le réseau de données par paquets sur la base de l'adresse de réseau et de l'identificateur, où le transfert est effectué en utilisant l'interface Gi et l'interface de réseau d'accès radio.

15. Noeud passerelle (MOGW) selon la revendication 14, comprenant :
- des moyens pour étiqueter un paquet de données avec l'identificateur ; et
- des moyens pour transmettre le paquet de données selon la au moins une table de transfert et l'identificateur ; et/ou
- des moyens pour recevoir un paquet de données étiqueté ; et
- des moyens pour traiter le paquet de données selon la au moins une table de transfert et l'identificateur.

16. Noeud passerelle (MOGW) selon la revendication 14 ou 15, incluant une ou plusieurs interfaces configurées pour communiquer avec un enregistreur de localisation nominal (HLR) en utilisant une interface d'authentification (Gr).

17. Noeud passerelle (MOGW) selon l'une quelconque des revendications 14 à 16, comprenant :
- une pluralité de cartes d'interface ou de lames ; où la table de transfert est divisée entre et stockée sur une ou plusieurs cartes d'interface ou lames et un moyen de contrôle pour créer et mettre à jour la table de transfert est stocké sur une autre carte d'interface.

18. Noeud passerelle (MOGW) selon l'une quelconque des revendications 14 à 17, dans lequel les moyens de transfert comprennent des moyens de transfert d'interface d'accès (Iu) et des moyens de transfert d'interface de réseau de données (Gi).

19. Noeud passerelle (MOGW) selon l'une quelconque des revendications 14 à 18, dans lequel lesdits moyens sont répartis sur des cartes d'interface ou des lames différentes.

20. Noeud passerelle (MOGW) selon l'une quelconque des revendications 14 à 19, dans lequel des messages de signalisation sont conformes aux normes de téléphone mobile de deuxième et troisième génération et peuvent inclure des messages de rattachement, de détachement, de mise à jour de zone de routage, d'activation de contexte PDP, de désactivation de contexte PDP, de relocalisation SNRS et de libération Iu.

21. Noeud passerelle (MOGW) selon l'une quelconque des revendications 14 à 20, dans lequel
- le réseau d'accès radio (RAN) inclut un contrôleur de réseau radio (RNC) et un noeud B conformément à une norme UMTS de troisième génération.

22. Noeud passerelle (MOGW) selon l'une quelconque des revendications 14 à 21, dans lequel :
- le réseau d'accès radio (RAN) inclut un contrôleur de station de base (BSC) conformément à la norme GSM de deuxième génération et/ou à la norme EDGE.
